# EUROPEAN PATENT SPECIFICATION

(11) **EP 2 800 197 B1**
(45) Date of publication and mention of the grant of the patent: **22.03.2017**
(21) Application number: 13305576.4
(22) Date of filing: 02.05.2013
(51) Int. Cl.: H01M 10/0569, H01M 10/0568, H01M 10/052, H01M 4/66, H01G 11/60, H01G 11/06

(54) **Fluorinated carbonates as solvent for lithium sulfonimide-based electrolytes**
Fluorierte Carbonate als Lösungsmittel für Elektrolyte auf Lithiumsulfonimid-Basis
Carbonates fluorés comme solvant pour des électrolytes à base de sulfonimidure de lithium

(43) Date of publication of application: 05.11.2014
(73) Proprietor: Westfälische Wilhelms-Universität Münster, 48149 Münster (DE); Institut Polytechnique de Grenoble, 38031 Grenoble Cedex (FR); Centre National de la Recherche Scientifique (C.N.R.S.), 75794 Paris Cedex 16 (FR)
(72) Inventor: Kalhoff, Julian, 48149 Münster (DE); Bresser, Dominic, 48153 Münster (DE); Passerini, Stefano, 48149 Münster (DE); Bolloli, Marco, 38100 Grenoble (FR); Alloin, Fannie, 38220 Vizille (FR); Sanchez, Jean-Yves, 38330 Saint-Ismier (FR)
(74) Representative: Michalski Hüttermann & Partner Patentanwälte mbB

(56) References cited:
- EP-A1- 0 599 534
- EP-A1- 0 806 804
- EP-A1- 1 630 894
- EP-A1- 1 890 357
- EP-A1- 2 302 714
- JP-A- 2007 305 352
- US-A1- 2006 127 777
- US-A1- 2007 224 516
- US-A1- 2009 253 044
- M.C. SMART ET AL: "Improved performance of lithium-ion cells with the use of fluorinated carbonate-based electrolytes", JOURNAL OF POWER SOURCES, vol. 119-121, 1 June 2003 (2003-06-01), pages 359-367, XP004430195, ISSN: 0378-7753, DOI: 10.1016/S0378-7753(03)00266-0

## Description

The present invention relates to an electrolyte solution comprising an electrolyte salt, particularly a sulfonimide salt, and an electrolyte solvent for use in lithium and lithium-ion batteries.

Lithium-ion batteries are nowadays the leading battery technology, since they offer efficient and high energy storage as well as high power density, and thus, they dominate the market for batteries used in portable electronic devices. However, future large-scale applications like stationary energy storage and electric vehicles still require further improvement of the existing technology in terms of energy density, supplied power, and in particular in terms of safety. One of the major safety issues regarding the up-scaling of lithium-ion battery technology, particularly with respect to its application in electric vehicles, is related to the use of LiPF₆ as lithium salt in currently commercially available batteries. In fact, LiPF₆ does not have any single exceptional property, making it particularly attractive for application as lithium salt in commercial batteries. However, besides a well-balanced combination of chemical and electrochemical properties it offers one major advantage relatively to other lithium salts, the initial passivation of the aluminum surface of the cathodic current collector, caused by the partial decomposition of the lithium salt and oxidation of the metallic aluminum at high potentials, forming a dense film of AlF₃ on the top of the air-formed surface layer of Al₂O₃. Nevertheless, there arise some major issues by the use of LiPF₆, as it is thermally unstable, resulting in the formation of gaseous PF₅, a strong Lewis acid. Moreover, its hydrolysis results in the formation of HF, which is not only highly UD 40475 / SAM:AL

toxic, but furthermore has a deleterious effect on the electrolyte solvent as well as the electrodes active materials. Finally, a reaction of ethylene carbonate and LiPF₆ at high temperatures and in presence of transition metal based cathodes has been reported to result in the formation of highly toxic fluoroethanol derivatives.

Hence, research on electrolytes for lithium-based batteries has focused on the development and investigation of new lithium salts, replacing LiPF₆ and offering an enhanced thermal, chemical, and electrochemical stability. One of the most promising salts is certainly lithium bis(trifluoromethanesulfonyl)imide or briefly LiTFSI as it provides a high ionic conductivity and a significantly improved thermal and electrochemical stability relatively to LiPF₆. Additionally, the immediate formation of HF by hydrolysis of the salt is prevented. However, LiTFSI severely suffers aluminum current collector corrosion (aluminum dissolution) at potentials higher than 3.5 V, which has so far inhibited its application in commercial lithium-based batteries. This oxidative decomposition of the aluminum current collector causes an increase of the internal resistance of the cell, resulting in a continuous capacity fading and thus a decrease of the specific energy. Moreover, a continuous decomposition of the aluminum might eventually result in a loss of the mechanical integrity of the current collector to the outer circuit.

Several approaches have been pursued in order to overcome the issue of aluminum current collector corrosion for LiTFSI-based lithium battery electrolytes, for example the utilization of ether-based solvents, such as e.g. THF or DME, which allow for a reduction of the aluminum corrosion and a shift of oxidative current collector decomposition towards higher potentials but can not completely suppress the corrosion phenomenon, or the use of nitrile based electrolyte solvents, comprising at least one cyano group, which appeared to have a beneficial effect on the suppression of aluminum corrosion, resulting in an overpotential of around 0.4 V for the aluminum dissolution. However, aluminum corrosion still takes place at potentials higher than 4.1 V. Also, the use of ionic liquids as electrolyte solvent has shown a significant suppression of the aluminum current collector corrosion. However, the commercial use of ionic liquids as electrolyte solvents is still hampered by its high cost and low ionic conductivity at ambient temperature. Furthermore, a coating of the aluminum current collector has been reported to suppress the aluminum dissolution upon cycling of lithium(-ion) cells. However, such a coating of the current collector leads to the requirement of additional processing steps and thus increasing cost, particularly if rather expensive materials are used for the coating.

US 2005/0031963 A1 addresses the problem of the safety of lithium battery and the use of flame retardant electrolytes. It is disclosed that an electrolyte solvent comprising 20 to 60% by volume of a cyclic fluoroethylene carbonate and a linear ester solvent, such as for instance dimethyl or diethyl carbonate, results in an enhanced safety of the battery comprising the same.

US 2006/127777 A1 discloses a battery capable of improving cycle characteristics. A spirally wound electrode body in which a cathode and an anode are layered with a separator in between and wound is included inside a battery can. An electrolytic solution is impregnated in the separator. For the solvent, a mixed solvent of a cyclic ester derivative having halogen atom and a chain compound having halogen atom is used. Thereby, decomposition reaction of the solvent in the anode is inhibited, and cycle characteristics are improved.

EP 1 890 357 A1 discloses a nonaqueous electrolytic solution comprising a linear carbonate represented by the formula HF₂C-(CX^{a}₂)ₙ-CH₂-O-CO-O-R^{a} (1) wherein X^{a} represents each independently hydrogen or any group; R^{a} represents optionally substituted alkyl; and n represents an integer of zero or more.

EP 2 302 714 A1 discloses a lithium secondary cell comprising a negative electrode, a non-aqueous electrolytic solution and a positive electrode, wherein an active material for the negative electrode comprises lithium titanate and the non-aqueous electrolytic solution comprises a fluorine-containing solvent.

US 2009/253044 A1 discloses a nonaqueous electrolyte solution comprising a nonaqueous solvent, the nonaqueous solvent comprising a fluorinated solvent including a linear fluorinated carbonate (a1) and a fluorinated ethylene carbonate (a2), wherein the total amount of the fluorinated solvent in the nonaqueous solvent is in the range of from 50 to 100 weight %.

JP 2007 305352 A, EP 1 630 894 A1, US 2007/224516 A1, M.C. Smart et al., Journal of Power Sources, vol. 119-121, 2003, pages 359-367, EP 0 806 804, and EP 0 599 534 A1 disclose further nonaqueous electrolytes containing fluorinated linear carbonates.

Thus, there still is need for the suppression and prevention of aluminum current collector corrosion resulting from the use of LiTFSI as lithium salt in liquid organic electrolytes in order to improve the safety of lithium(-ion) batteries, particularly with respect to large scale applications, as for instance electric vehicles or stationary energy storage.

Therefore, the object underlying the present invention was to provide a means usable for the suppression or prevention of aluminum current collector corrosion resulting from the use of LiTFSI as lithium salt in liquid organic electrolytes.

The problem is solved by an electrolyte solution comprising an electrolyte salt and an electrolyte solvent, wherein the electrolyte solvent comprises an n-fluoro diethyl carbonate selected from the group comprising ethyl (1-fluoroethyl) carbonate, 1-fluoroethyl (2,2,2-trifluoroethyl) carbonate and mixtures thereof in an amount in the range of ≥ 20 wt% to ≤ 100 wt%, referring to a total amount of the electrolyte solvent of 100 wt%, and wherein the electrolyte salt is a lithium sulfonimide salt selected from the group comprising bis(trifluoromethanesulfonyl)imide and lithium bis(fluorosulfonyl)imide.

Surprisingly, it was found that the prevention of aluminum current collector corrosion while using LiTFSI-based electrolytes could be achieved by utilizing linear fluorinated carbonates as electrolyte solvent. Surprisingly, the utilization of linear fluorinated carbonates as electrolyte solvent for LiTFSI-based electrolytes revealed a similar electrochemical behavior as observed for the utilization of LiPF₆ as lithium salt. Advantageously, no aluminum corrosion could be observed on the aluminum foil current collector subsequently, even after 100 potentiodynamic cyclic sweeps. Such prevention of aluminum corrosion in combination with the use of LiTFSI is surprising and has never been reported before.

Further, electrochemical studies using common lithium-ion battery cathode materials confirmed that electrolyte compositions comprising ≥ 20 wt% of linear fluorinated carbonates can be readily used for lithium-ion cells and are sufficiently stable towards oxidation, also in presence of transition metal oxides and phosphates, delivering a highly similar specific capacity, cycling stability, and electrochemical performance as observed for commercial lithium-ion cells using 1M LiPF₆ in EC:DMC (1:1).

Particularly, the electrolyte solution comprising ≥ 20 wt% of an n-fluoro diethyl carbonate selected from the group comprising ethyl (1-fluoroethyl) carbonate, 1-fluoroethyl (2,2,2-trifluoroethyl) carbonate and mixtures thereof is usable for electrolyte solutions comprising a sulfonimide electrolyte salt and using an aluminum current collector.

According to the present invention, the electrolyte salt is a lithium sulfonimide salt selected from the group comprising bis(trifluoromethanesulfonyl)imide LiN(SO₂CF₃)₂ (LiTFSI) and lithium bis(fluorosulfonyl)imide (LiFSI).

Sulfonimide-based lithium salts provide a high ionic conductivity and show enhanced thermal and electrochemical stability. Further, the immediate formation of HF by hydrolysis as may occur with LiPF₆ is prevented. Particularly the anodic aluminum dissolution, which usually is referred to as "corrosion" and from which the utilization of sulfonimide-based lithium salts suffered, can be prevented by using a linear fluorinated carbonate according to the invention. Hence, the use of sulfonimide-based lithium salts such as LiTFSI will result in significantly safer lithium-ion batteries, as the severe anodic dissolution of aluminum current collectors particularly at potentials above 3.5 V is prevented using the linear fluorinated carbonates of the invention. Particularly LiTFSI and LiFSI (lithium bis(fluorosulfonyl)imide), which are known to suffer anodic aluminum dissolution, can advantageously be utilized as lithium salt for (fluorinated) organic carbonate-based electrolytes in lithium-ion batteries by adding a linear fluorinated carbonate according to the invention. Further, it could be shown that also for lithium (nonafluoro butan-2-one sulfonyl)(trifluoromethylsulfonyl) imide LiN(SO₂C₂F₄OC₂F₅)(SO₂CF₃) in a solvent mixture of 4-fluoro-1,3-dioxolan-2-one (F₁EC), ethyl (1-fluoroethyl) carbonate (F₁DEC) and 1-fluoroethyl (2,2,2-trifluoroethyl) carbonate (F₄DEC) aluminum dissolution could be prevented.

The n-fluoro diethyl carbonate is selected from the group comprising ethyl (1-fluoroethyl) carbonate, 1-fluoroethyl (2,2,2-trifluoroethyl) carbonate and mixtures thereof.

The corresponding chemical formulas of ethyl (1-fluoroethyl) carbonate (F₁DEC) and 1-fluoroethyl (2,2,2-trifluoroethyl) carbonate (F₄DEC), respectively, are given below:

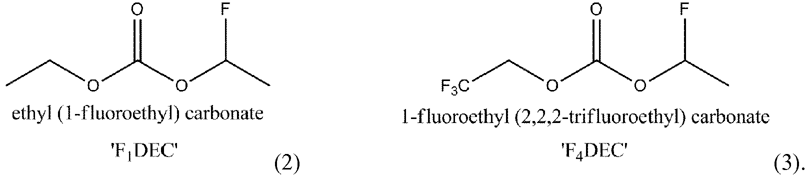

It could be shown that particularly the utilization of ethyl (1-fluoroethyl) carbonate (F₁DEC) or 1-fluoroethyl (2,2,2-trifluoroethyl) carbonate (F₄DEC) as electrolyte solvent for LiTFSI-based electrolytes resulted in the prevention of anodic aluminum dissolution and no corrosion was observed for the aluminum foil used as current collector, even after 100 potentiodynamic cyclic sweeps. Hence, an electrolyte solution may comprise an unary solution of ethyl (1-fluoroethyl) carbonate or 1-fluoroethyl (2,2,2-trifluoroethyl) carbonate as the electrolyte solvent.

Advantageously, a study on the conductivity of these primary electrolyte solvents comprising LiTFSI as lithium salt revealed that the ionic conductivity can be further improved by utilizing secondary or ternary solvent mixtures of linear and cyclic fluorinated carbonates. So, in an embodiment, the electrolyte solvent further comprises at least one cyclic fluorinated carbonate selected from the group comprising 4-fluoro-1,3-dioxolan-2-one, 4,5-difluoro-1,3-dioxolan-2-one particularly *cis*-4,5-difluoro-1,3-dioxolan-2-one or *trans*-4,5-difluoro-1,3-dioxolan-2-one, and mixtures thereof. 4-Fluoro-1,3-dioxolan-2-one (F₁EC) and *trans*-4,5-difluoro-1,3-dioxolan-2-one (F₂EC) are represented by the following formulas (4) and (5), respectively:

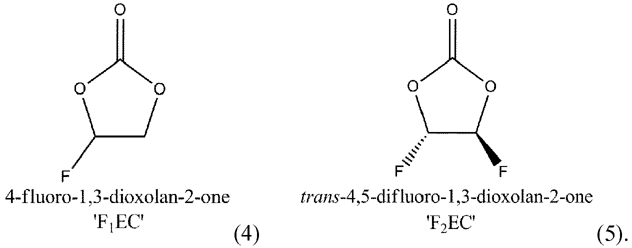

In embodiments, the electrolyte solution comprises a binary solvent mixture of ethyl (1-fluoroethyl) carbonate or 1-fluoroethyl (2,2,2-trifluoroethyl) carbonate and a cyclic fluorinated carbonate selected from the group comprising 4-fluoro-1,3-dioxolan-2-one (F₁EC), cis-4,5-difluoro-1,3-dioxolan-2-one, and *trans*-4,5-difluoro-1,3-dioxolan-2-one. It could be shown that the conductivity of binary solvent mixtures was higher than that of the linear carbonates alone.

The binary solvent mixture may comprise a mixture of ethyl (1-fluoroethyl) carbonate or 1-fluoroethyl (2,2,2-trifluoroethyl) carbonate and 4,5-difluoro-1,3-dioxolan-2-one, particularly *trans*-4,5-difluoro-1,3-dioxolan-2-one (F₂EC), in a ratio of 1:1. Advantageously, for a binary solvent mixture of 1 M LiTFSI in F₁DEC/F₁EC (1:1) no pitting corrosion was observed by a subsequent SEM analysis of the electrochemically studied aluminum foil. In a preferred embodiment of a binary solvent mixture, the electrolyte solution comprises a mixture of ethyl (1-fluoroethyl) carbonate (F₁DEC) or 1-fluoroethyl (2,2,2-trifluoroethyl) carbonate (F₄DEC) and 4-fluoro-1,3-dioxolan-2-one (F₁EC), in a ratio of 1:1. It could be shown that the conductivity of binary mixtures of F₁DEC or F₄DEC with F₁EC were even higher than that of mixtures with F₂EC.

If not indicated otherwise, the ratios of electrolyte solvents or compounds as given refer to a respective weight ratio. Weight percent, abbreviated wt% or wt.-% are synonyms that refer to the concentration of a compound as the weight of the compound divided by the weight of the composition and multiplied by 100. The weight-% (wt.-% or wt%) of the components are calculated based on the total weight amount of the composition, if not otherwise stated. The total amount of all solvents of the solution does not exceed 100 wt.-%.

In further embodiments, the electrolyte solution comprises a ternary solvent mixture of at least one n-fluoro diethyl carbonate selected from the group comprising ethyl (1-fluoroethyl) carbonate, 1-fluoroethyl (2,2,2-trifluoroethyl) carbonate and mixtures thereof, and at least one cyclic fluorinated carbonate selected from the group comprising 4-fluoro-1,3-dioxolan-2-one, cis-4,5-difluoro-1,3-dioxolan-2-one, *trans*-4,5-difluoro-1,3-dioxolan-2-one and mixtures thereof. The ternary solvent mixture may either comprise an n-fluoro diethyl carbonate and two different cyclic fluorinated carbonates, or may comprise two linear fluorinated carbonates and one cyclic fluorinated carbonate. Particularly, a mixture of ethyl (1-fluoroethyl) carbonate, 4-fluoro-1,3-dioxolan-2-one, and *trans*-4,5-difluoro-1,3-dioxolan-2-one proved useful in regard of conductivity, the resulting current and inhibition of corrosion. In preferred embodiments, the electrolyte solution comprises a ternary solvent mixture of ethyl (1-fluoroethyl) carbonate or 1-fluoroethyl (2,2,2-trifluoroethyl) carbonate, 4-fluoro-1,3-dioxolan-2-one, and *trans*-4,5-difluoro-1,3-dioxolan-2-one in a ratio of 1:1:1. The F₂EC can have a beneficial effect on the resulting current of a ternary mixture. Also in such ternary mixture the aluminum foil did not show any indication of severe pitting corrosion.

Further, it could advantageously be shown that the linear fluorinated carbonates according to the invention also are usable for the inhibition of aluminum current collector corrosion in non-fluorinated organic carbonates. This is of particular benefit as non-fluorinated organic carbonates are used as standard solvents in commercial lithium-ion batteries. Hence, another preferred embodiment refers to an electrolyte solution further comprising a non-fluorinated organic carbonate selected from the group comprising ethylene carbonate, ethyl methyl carbonate, propylene carbonate, dimethyl carbonate, diethyl carbonate and mixtures thereof. It could be shown that the linear fluorinated carbonates, particularly ethyl (1-fluoroethyl) carbonate (F₁DEC) or 1-fluoroethyl (2,2,2-trifluoroethyl) carbonate (F₄DEC), in a standard electrolyte solvent mixture of ethylene carbonate and dimethyl carbonate in a 1:1 ratio efficiently could prevent an aluminum current collector from anodic aluminum dissolution. Preferably, the electrolyte solution comprises a solvent mixture of ethylene carbonate, dimethyl carbonate and ethyl (1-fluoroethyl) carbonate or 1-fluoroethyl (2,2,2-trifluoroethyl) carbonate in a ratio of 1:1:1.

It was investigated whether for the beneficial effect of the linear fluorinated carbonates already the addition of only little amounts to common organic electrolytes might be sufficient. However, it appeared that its use as simple additive, for example in amount of about 4 wt.%, referring to the total weight of the electrolyte solvent, either in cyclic fluorinated carbonates or in standard non-fluorinated carbonates was not sufficient in order to suppress aluminum current collector corrosion. Further, also an amount of about 11 wt.-% of ethyl (1-fluoroethyl) carbonate (F₁DEC) in cyclic fluorinated or non-fluorinated carbonate-based electrolytes was not sufficient to protect the aluminum current collector from corrosion. Only an amount of ≥ 20 wt.-% of ethyl (1-fluoroethyl) carbonate (F₁DEC) either in cyclic fluorinated carbonates or in standard non-fluorinated carbonates showed a clear improvement in the passivation of an aluminum current collector.

In embodiments, the electrolyte solution comprises the n-fluoro diethyl carbonate in a range of ≥ 25 wt% to ≤ 100 wt%, preferably in a range of ≥ 25 wt% to ≤ 75 wt%, more preferably in a range of ≥ 30 wt% to ≤ 50 wt%, referring to a total amount of the electrolyte solvent of 100 wt%.

Studies using 1 M LiTFSI and cyclic fluorinated solvent mixtures with F₁DEC, for example F₁EC/F₂EC (1:1), showed that to properly protect the aluminum current collector from anodic aluminum dissolution the electrolyte composition should comprise at least about 20 wt.-%, while improved protection could be achieved using an electrolyte solution comprising about 25 wt.-% and even more preferably about 30 wt.-% of F₁DEC in case fluorinated cyclic carbonates were used as electrolyte solvents. About 33 wt.-% of F₁DEC appeared to be more than sufficient for a proper passivation of the aluminum current collector. Hence, for binary or ternary solvent mixtures with fluorinated cyclic carbonates the electrolyte solution may comprise the n-fluoro diethyl carbonate in a range of ≥ 20 wt% to ≤ 50 wt%, preferably range of ≥ 25 wt% to ≤ 50 wt%, more preferably in a range of ≥ 25 wt% to ≤ 33 wt%, referring to a total amount of the electrolyte solvent of 100 wt%. Using a low amount of linear fluorinated carbonates will reduce the total cost for the solvent.

Referring to non-fluorinated carbonate solvents, aluminum passivation within the first cycles by using 25 wt.% of F₁DEC could be achieved. However, a F₁DEC content of around 33 wt.-% appeared preferable with respect to the occurring current within the initial cycles, indicating a more effective aluminum passivation. To properly protect the aluminum current collector from anodic aluminum dissolution the electrolyte composition should comprise at least about 20 wt.%, while improved protection could be achieved using an electrolyte solution comprising about 25 wt.% and even more preferably about 30 wt.% of F₁DEC in case non-fluorinated organic carbonates are used as electrolyte solvents. Hence, for binary or ternary solvent mixtures with non-fluorinated carbonates the electrolyte solution may comprise the n-fluoro diethyl carbonate in a range of ≥ 20 wt% to ≤ 50 wt%, preferably in a range of ≥ 25 wt% to ≤ 50 wt%, referring to a total amount of the electrolyte solvent of 100 wt%. Particularly referring to mixtures of ethylene carbonate and dimethyl carbonate, in embodiments, the electrolyte solution comprises a mixture of ethylene carbonate and dimethyl carbonate in a ratio of 1:1 and the n-fluoro diethyl carbonate in a range of ≥ 20 wt% to ≤ 50 wt%, preferably in the range of ≥ 25 wt% to ≤ 50 wt%, referring to a total amount of the electrolyte solvent of 100 wt%.

Another aspect of the invention refers to an alkali or alkaline earth metal-based electrochemical energy storage device, particularly a lithium battery, a lithium-ion battery, a lithium-ion accumulator, a lithium polymer battery or a lithium-ion capacitor, comprising an electrolyte solution according to the invention. Preferably, the electrolyte solution according to the invention is usable for a lithium or lithium-ion battery. A lithium-ion battery for example comprises a first electrode of a cathodic material, a second electrode of an anodic material and an electrolyte.

The term "energy storage device" comprises primary batteries and rechargeable batteries or accumulators. However, colloquially accumulators are also denoted with the term "battery" which usually is used as a generic term. Hence, for simplicity if not denoted otherwise, in the present invention the term "battery" is used synonymous to also designate "accumulators".

Surprisingly, it was found that the electrolyte compositions are not only usable in combination with common lithium-ion battery cathode materials such as LiFePO₄ (LFP) or LiNi_{1/3}Mn_{1/3}Co_{1/3}O₂ (NMC) but also provide a promising electrolyte solvent for high voltage cathode materials, as for instance LiNi_{0.4}Mn_{1.6}O₄. Advantageously, all electrolyte compositions were stable at least up to 5 V. Further, it could be shown that cells comprising the electrolyte compositions exhibited a high efficiency and high capacity. Particularly, in NMC half cells 1 M LiTFSI in F₁DEC showed slightly higher efficiency than for commercial LP30 cells. Also, the electrochemical performance of NMC in 1 M LiTFSI in binary mixtures of fluorinated carbonates such as F₁DEC /F₁EC (1:1) as well as in ternary mixtures of fluorinated carbonates such as F₁DEC/F₁EC/F₂EC (1:1:1) showed a high efficiency comparable with LP30 cells. Moreover, binary mixtures of linear and cyclic fluorinated carbonates have been confirmed to be also suitable for graphite-based anodes.

Consequently, the electrolyte compositions can be readily used for lithium-ion cells and are sufficiently stable towards oxidation, also in presence of transition metal oxides and phosphates, delivering at least a highly similar specific capacity, cycling stability, and electrochemical performance as observed for commercial available cells.

Particularly, the electrolyte solution comprising an electrolyte salt and an electrolyte solvent, wherein the electrolyte solvent comprises an n-fluoro diethyl carbonate selected from the group comprising ethyl (1-fluoroethyl) carbonate, 1-fluoroethyl (2,2,2-trifluoroethyl) carbonate and mixtures thereof in an amount in the range of ≥ 20 wt% to ≤ 100 wt%, referring to a total amount of the electrolyte solvent of 100 wt%, and wherein the electrolyte salt is a lithium sulfonimide salt selected from the group comprising bis(trifluoromethanesulfonyl)imide and lithium bis(fluorosulfonyl)imide, is usable for alkali or alkaline earth metal-based batteries containing an electrolyte solution comprising a sulfonimide electrolyte salt and using an aluminum current collector.

The electrolyte salt is a lithium sulfonimide salt selected from the group comprising bis(trifluoromethanesulfonyl)imide LiN(SO₂CF₃)₂ (LiTFSI) and lithium bis(fluorosulfonyl)imide (LiFSI).

The n-fluoro diethyl carbonate is selected from the group comprising ethyl (1-fluoroethyl) carbonate, 1-fluoroethyl (2,2,2-trifluoroethyl) carbonate and mixtures thereof.

The electrolyte solvent further can comprises at least one cyclic fluorinated carbonate selected from the group comprising 4-fluoro-1,3-dioxolan-2-one, 4,5-difluoro-1,3-dioxolan-2-one particularly *cis-*4,5-difluoro-1,3-dioxolan-2-one or *trans*-4,5-difluoro-1,3-dioxolan-2-one, and mixtures thereof. Preferably, the electrolyte solution may comprises a binary solvent mixture of ethyl (1-fluoroethyl) carbonate or 1-fluoroethyl (2,2,2-trifluoroethyl) carbonate and a cyclic fluorinated carbonate selected from the group comprising 4-fluoro-1,3-dioxolan-2-one, cis-4,5-difluoro-1,3-dioxolan-2-one, and *trans*-4,5-difluoro-1,3-dioxolan-2-one. It could be shown that the conductivity of binary solvent mixtures was higher than that of the linear carbonates alone. The binary solvent mixture may comprise a mixture of ethyl (1-fluoroethyl) carbonate or 1-fluoroethyl (2,2,2-trifluoroethyl) carbonate and 4,5-difluoro-1,3-dioxolan-2-one, particularly *trans*-4,5-difluoro-1,3-dioxolan-2-one (F₂EC), in a ratio of 1:1. In a preferred embodiment of a binary solvent mixture, the electrolyte solution comprises a mixture of ethyl (1-fluoroethyl) carbonate (F₁DEC) or 1-fluoroethyl (2,2,2-trifluoroethyl) carbonate (F₄DEC) and 4-fluoro-1,3-dioxolan-2-one (F₁EC), in a ratio of 1:1.

Further, the electrolyte solution can comprises a ternary solvent mixture of at least one n-fluoro diethyl carbonate selected from the group comprising ethyl (1-fluoroethyl) carbonate, 1-fluoroethyl (2,2,2-trifluoroethyl) carbonate and mixtures thereof, and at least one cyclic fluorinated carbonate selected from the group comprising 4-fluoro-1,3-dioxolan-2-one, cis-4,5-difluoro-1,3-dioxolan-2-one, *trans-*4,5-difluoro-1,3-dioxolan-2-one and mixtures thereof. A ternary solvent mixture may either comprise an n-fluoro diethyl carbonate and two different cyclic fluorinated carbonates, or may comprise two linear fluorinated carbonates and one cyclic fluorinated carbonate. Particularly, a mixture of ethyl (1-fluoroethyl) carbonate, 4-fluoro-1,3-dioxolan-2-one, and *trans*-4,5-difluoro-1,3-dioxolan-2-one proved useful in regard of conductivity, the resulting current and inhibition of corrosion. The electrolyte solution may comprise a ternary solvent mixture of ethyl (1-fluoroethyl) carbonate or 1-fluoroethyl (2,2,2-trifluoroethyl) carbonate, 4-fluoro-1,3-dioxolan-2-one, and *trans*-4,5-difluoro-1,3-dioxolan-2-one in a ratio of 1:1:1.

The electrolyte solution may comprise the n-fluoro diethyl carbonate in a range of ≥ 25 wt% to ≤ 100 wt%, preferably in a range of ≥ 25 wt% to ≤ 75 wt%, more preferably in a range of ≥ 30 wt% to ≤ 50 wt%, referring to a total amount of the electrolyte solvent of 100 wt%.

For binary or ternary solvent mixtures with fluorinated cyclic carbonates the electrolyte solution may comprise the n-fluoro diethyl carbonate in a range of ≥ 20 wt% to ≤ 50 wt%, preferably range of ≥ 25 wt% to ≤ 50 wt%, more preferably in a range of ≥ 25 wt% to ≤ 33 wt%, referring to a total amount of the electrolyte solvent of 100 wt%.

The electrolyte solution further may comprise a non-fluorinated organic carbonate selected from the group comprising ethylene carbonate, ethyl methyl carbonate, propylene carbonate, dimethyl carbonate, diethyl carbonate and mixtures thereof. For binary or ternary solvent mixtures with non-fluorinated carbonates the electrolyte solution may comprise the n-fluoro diethyl carbonate in a range of ≥ 20 wt% to ≤ 50 wt%, preferably in a range of ≥ 25 wt% to ≤ 50 wt%, more preferably in a range of ≥ 25 wt% to ≤ 33 wt%, referring to a total amount of the electrolyte solvent of 100 wt%. Particularly referring to mixtures of ethylene carbonate and dimethyl carbonate, in embodiments, the electrolyte solution comprises a mixture of ethylene carbonate and dimethyl carbonate in a ratio of 1:1 and the n-fluoro diethyl carbonate in a range of ≥ 20 wt% to ≤ 50 wt%, preferably in the range of ≥ 25 wt% to ≤ 50 wt%, referring to a total amount of the electrolyte solvent of 100 wt%.

Another aspect of the invention refers to the use of an n-fluoro diethyl carbonate selected from the group comprising ethyl (1-fluoroethyl) carbonate, 1-fluoroethyl (2,2,2-trifluoroethyl) carbonate and mixtures thereof, in an amount in the range of ≥ 20 wt% to ≤ 100 wt%, referring to a total amount of an electrolyte solvent of 100 wt%, for the prevention of aluminum current collector corrosion in an alkali or alkaline earth metal-based electrochemical energy storage device, particularly a lithium-ion battery or lithium polymer battery containing an electrolyte solution comprising an alkali or alkaline earth metal sulfonimide or sulfonmethide salt.

The alkali or alkaline earth metal sulfonimide salt in preferred embodiments is selected from lithium, sodium, potassium, magnesium, or calcium metal sulfonimide salts. Preferably the sulfonimide salt is a lithium salt selected from the group comprising lithium bis(trifluoromethanesulfonyl)imide LiN(SO₂CF₃)₂ (LiTFSI), lithium bis(fluorosulfonyl)imide (LiFSI) LiN(FSO₂)₂, lithium (trifluoromethylsulfonyl)(nonafluorobutanesulfonyl)imide LiN(SO₂CF₃)(SO₂C₄F₉), lithium (fluorosulfonyl)(nonafluorobutanesulfonyl)imide LiN(SO₂F)(SO₂C₄F₉), lithium (nonafluoro butan-2-one sulfonyl)(trifluoromethylsulfonyl)imide LiN(SO₂C₂F₄OC₂F₅)(SO₂CF₃), and lithium (nonafluoro butan-2-one sulfonyl)(fluorosulfonyl)imide LiN(SO₂C₂F₄OC₂F₅)(SO₂F). Preferred lithium sulfonimide salts are bis(trifluoromethanesulfonyl)imide LiN(SO₂CF₃)₂ (LiTFSI) and lithium bis(fluorosulfonyl)imide (LiFSI). The sulfonmethide salt preferably is LiC(CF₃SO₂)₃.

The n-fluoro diethyl carbonate is selected from the group comprising ethyl (1-fluoroethyl) carbonate, 1-fluoroethyl (2,2,2-trifluoroethyl) carbonate and mixtures thereof.

In an embodiment of the use, the electrolyte solvent further comprises at least one cyclic fluorinated carbonate selected from the group comprising 4-fluoro-1,3-dioxolan-2-one, 4,5-difluoro-1,3-dioxolan-2-one particularly *cis*-4,5-difluoro-1,3-dioxolan-2-one or *trans*-4,5-difluoro-1,3-dioxolan-2-one and mixtures thereof, and/or a non-fluorinated organic carbonate selected from the group comprising ethylene carbonate, ethyl methyl carbonate, propylene carbonate, dimethyl carbonate, diethyl carbonate and mixtures thereof.

The electrolyte solvent further can comprises at least one cyclic fluorinated carbonate selected from the group comprising 4-fluoro-1,3-dioxolan-2-one, cis-4,5-difluoro-1,3-dioxolan-2-one, *trans-4,5-*difluoro-1,3-dioxolan-2-one, and mixtures thereof.

Preferably, the electrolyte solution may comprises a binary solvent mixture of ethyl (1-fluoroethyl) carbonate or 1-fluoroethyl (2,2,2-trifluoroethyl) carbonate and a cyclic fluorinated carbonate selected from the group comprising 4-fluoro-1,3-dioxolan-2-one, cis-4,5-difluoro-1,3-dioxolan-2-one, and *trans*-4,5-difluoro-1,3-dioxolan-2-one. It could be shown that the conductivity of binary solvent mixtures was higher than that of the linear carbonates alone. The binary solvent mixture may comprise a mixture of ethyl (1-fluoroethyl) carbonate or 1-fluoroethyl (2,2,2-trifluoroethyl) carbonate and 4,5-difluoro-1,3-dioxolan-2-one, particularly *trans*-4,5-difluoro-1,3-dioxolan-2-one (F₂EC), in a ratio of 1:1. In a preferred embodiment of a binary solvent mixture, the electrolyte solution comprises a mixture of ethyl (1-fluoroethyl) carbonate (F₁DEC) or 1-fluoroethyl (2,2,2-trifluoroethyl) carbonate (F₄DEC) and 4-fluoro-1,3-dioxolan-2-one (F₁EC), in a ratio of 1:1.

Further, the electrolyte solution can comprises a ternary solvent mixture of at least one n-fluoro diethyl carbonate selected from the group comprising ethyl (1-fluoroethyl) carbonate, 1-fluoroethyl (2,2,2-trifluoroethyl) carbonate and mixtures thereof, and at least one cyclic fluorinated carbonate selected from the group comprising 4-fluoro-1,3-dioxolan-2-one, cis-4,5-difluoro-1,3-dioxolan-2-one, *trans-*4,5-difluoro-1,3-dioxolan-2-one and mixtures thereof. An ternary solvent mixture may either comprise an n-fluoro diethyl carbonate and two different cyclic fluorinated carbonates, or may comprise two linear fluorinated carbonates and one cyclic fluorinated carbonate. Particularly, a mixture of ethyl (1-fluoroethyl) carbonate, 4-fluoro-1,3-dioxolan-2-one, and *trans*-4,5-difluoro-1,3-dioxolan-2-one proved useful in regard of conductivity, the resulting current and inhibition of corrosion. The electrolyte solution may comprise a ternary solvent mixture of ethyl (1-fluoroethyl) carbonate or 1-fluoroethyl (2,2,2-trifluoroethyl) carbonate, 4-fluoro-1,3-dioxolan-2-one, and *trans*-4,5-difluoro-1,3-dioxolan-2-one in a ratio of 1:1:1.

The electrolyte solution may comprise the n-fluoro diethyl carbonate in a range of ≥ 25 wt% to ≤ 100 wt%, preferably in a range of ≥ 25 wt% to ≤ 75 wt%, more preferably in a range of ≥ 30 wt% to ≤ 50 wt%, referring to a total amount of the electrolyte solvent of 100 wt%.

For binary or ternary solvent mixtures with fluorinated cyclic carbonates the electrolyte solution may comprise the n-fluoro diethyl carbonate in a range of ≥ 20 wt% to ≤ 50 wt%, preferably range of ≥ 25 wt% to ≤ 50 wt%, more preferably in a range of ≥ 25 wt% to ≤ 33 wt%, referring to a total amount of the electrolyte solvent of 100 wt%.

The electrolyte solution further may comprise a non-fluorinated organic carbonate selected from the group comprising ethylene carbonate, ethyl methyl carbonate, propylene carbonate, dimethyl carbonate, diethyl carbonate and mixtures thereof. For binary or ternary solvent mixtures with non-fluorinated carbonates the electrolyte solution may comprise the n-fluoro diethyl carbonate in a range of ≥ 20 wt% to ≤ 50 wt%, preferably in a range of ≥ 25 wt% to ≤ 50 wt%, more preferably in a range of ≥ 25 wt% to ≤ 33 wt%, referring to a total amount of the electrolyte solvent of 100 wt%. Particularly referring to mixtures of ethylene carbonate and dimethyl carbonate, in embodiments, the electrolyte solution comprises a mixture of ethylene carbonate and dimethyl carbonate in a ratio of 1:1 and the n-fluoro diethyl carbonate in a range of ≥ 20 wt% to ≤ 50 wt%, preferably in the range of ≥ 25 wt% to ≤ 50 wt%, referring to a total amount of the electrolyte solvent of 100 wt%.

Unless otherwise defined, the technical and scientific terms used herein have the same meaning as commonly understood by one of ordinary skill in the art to which this invention belongs.

The examples which follow serve to illustrate the invention in more detail but do not constitute a limitation thereof.

In the figures show:
- Figure 1: Cyclovoltammograms of fluorinated linear carbonates as only solvents for a 1 M solution of LiTFSI. Figure 1a) shows the cyclovoltammogram for F₁DEC, and Figure 1b) for F₄DEC for 100 cycles using aluminum as working electrode.
- Figure 2: the cyclovoltammogram of 1 M LiTFSI in a binary mixture of F₁DEC and F₁EC in a ratio of 1:1 for 100 cycles using aluminum as working electrode.
- Figure 3: the cyclovoltammogram of 1 M LiTFSI in a ternary mixture of F₁DEC, F₁EC and F₂EC in a ratio of 1:1:1 for 100 cycles using aluminum as working electrode.
- Figure 4: Ionic conductivities of 1 M LiTFSI in linear fluorinated carbonates and binary solvent mixtures of linear and cyclic fluorinated carbonates.

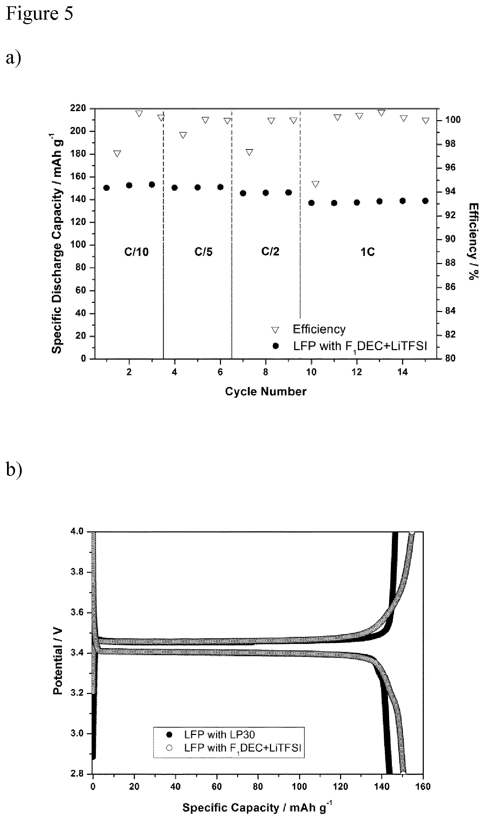

- Figure 5: the electrochemical performance of a carbon coated LiFePO₄ (LFP) electrode in a solution of 1 M LiTFSI in F₁DEC. Figure 5a) shows the galvanostatic cycling of the Li/LiFePO₄ half cell with Li as reference electrode. Cut-off potentials were at 2.8-4.0 V. Plotted is the specific discharge capacity (left ordinate) against the efficiency (right ordinate) against the cycle number. Figure 5b) shows the potential profile comparison of Li/LiFePO₄ half cell with Li as reference electrode with 1 M LiPF₆ in EC/DMC (1:1) (LP30) as electrolyte; Cut-offs: 2.8-4.0 V; 1st cycle (C/10). A C rate of 1C corresponds to an applied specific current of 170 mA g⁻¹, allowing a full charge or discharge of the electrode within one hour.

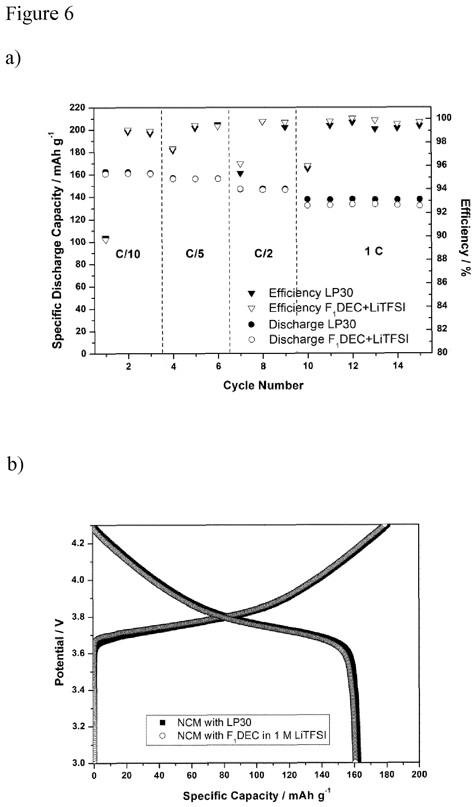

- Figure 6: the electrochemical performance of a LiNi_{1/3}Mn_{1/3}Co_{1/3}O₂ (NMC) half cell in a solution of 1 M LiTFSI in F₁DEC. Figure 6a) shows the galvanostatic cycling comparison of the Li/LiNi_{1/3}Mn_{1/3}Co_{1/3}O₂ half cell with Li as reference electrode and 1 M LiPF₆ in EC/DMC (1:1) (LP30) as electrolyte; Cut-offs: 3.0-4.3 V. Figure 6b) shows the potential profile comparison of Li/LiNi_{1/3}Mn_{1/3}Co_{1/3}O₂ half cell with Li as reference electrode with 1 M LiTFSI in F₁DEC and 1 M LiPF₆ in EC/DMC (1:1) (LP30) as electrolyte; Cut-offs: 2.8-4.0 V; 1st cycle (C/10). A C rate of 1C corresponds to an applied specific current of 160 mA g⁻¹, allowing a full charge or discharge of the electrode within one hour.
- Figure 7: a galvanostatic cycling comparison of a Li/LiNi_{1/3}Mn_{1/3}Co_{1/3}O₂ (NMC) half cell with Li as reference electrode with 1 M LiTFSI in a binary mixture of F₁EC/F₁DEC (1:1) and 1 M LiPF₆ in EC/DMC (1:1) (LP30) as electrolyte; Cut-offs: 3.0-4.3 V.
- Figure 8: a galvanostatic cycling comparison of a Li/LiNi_{1/3}Mn_{1/3}Co_{1/3}O₂ (NMC) half cell with Li as reference electrode with 1 M LiTFSI in a ternary mixture of F₁EC/F₂EC/F₁DEC (1:1:1) and 1 M LiPF₆ in EC/DMC (1:1) (LP30) as electrolyte; Cut-offs: 3.0-4.3 V.
- Figure 9: the electrochemical performance of a LiNi_{0.4}Mn_{1.6}O₄ (LNMO) half cell in a solution of 1 M LiTFSI in F₄DEC. Figure 9a) shows the galvanostatic cycling of Li/LiNi_{0.4}Mn_{1.6}O₄ half cell with Li as reference electrode; Cut-offs: 3.5-4.95 V. Figure 9b) shows selected potential profiles of the Li/LiNi_{0.4}Mn_{1.6}O₄ half cell; Cut-offs: 3.5-4.95 V; 2nd (C/10) and 3rd (C/10) cycle. A C rate of 1C corresponds to an applied specific current of around 147 mA g⁻¹, allowing a full charge or discharge of the electrode within one hour.

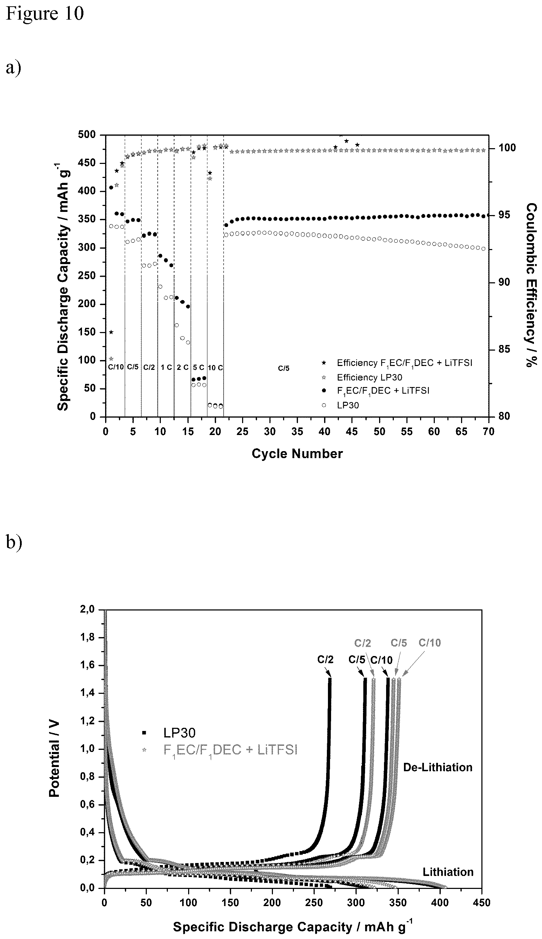

- Figure 10: the electrochemical performance of a graphite (SLP30) half cell in a binary mixture of 1 M LiTFSI in F₁DEC and F₁EC in a ratio of 1:1. Figure 10a) shows the galvanostatic cycling comparison of graphite (SLP30) half cell with Li as reference electrode with 1 M LiTFSI in F₁EC/F₁DEC (1:1) and of 1 M LiPF₆ in EC/DMC (1:1) (LP30) as electrolyte; Cut-offs: 0.02-1.5 V. Figure 10b) shows selected potential profiles of the graphite (SLP30) half cell at different C rates (C/10, C/5, C/2) in comparison for the two electrolytes. A C rate of 1C corresponds to an applied specific current of 372 mA g⁻¹, allowing a full charge or discharge of the electrode within one hour.
- Figure 11: Cyclovoltammograms for different concentrations of linear fluorinated carbonates with cyclic fluorinated carbonates as solvent for a 1 M solution of LiTFSI. Figure 11a) shows the cyclovoltammogram for a mixture of 20 wt% of 20 wt% of F₁DEC in F₁EC and F₂EC in a weight ratio of 1:1, and Figure 11b) for 33 wt% of F₁DEC in F₁EC and F₂EC in a weight ratio of 1:1, each for 100 cycles using aluminum as working electrode.
- Figure 12: Cyclovoltammograms for different concentrations of linear fluorinated carbonates with non-fluorinated carbonates as solvent for a 1 M solution of LiTFSI. Figure 12a) shows the cyclovoltammogram for a mixture of 25 wt% of F₁DEC and Figure 12b) for 33 wt% of F₁DEC in EC/DMC in a ratio of 1:1, each for 100 cycles using aluminum as working electrode.
- Figure 13: the determination of the electrochemical stability window (ESW) of fluorinated and non-fluorinated organic carbonate solvents with 1 M LiTFSI as conductive salt; the working electrode was a Platinum-wire with lithium metal foils as counter and reference electrodes; oxidative current limit: 0.01 mA.
- Figure 14: the cyclovoltammogram of 1 M lithium (nonafluoro butan-2-one sulfonyl) (trifluoromethylsulfonyl)imide (salt A) in a ternary mixture of F₁EC/F₁DEC/F₃DEC in a mol ratio of 3:0.5:0.5 for 100 cycles using aluminum as working electrode; scan rate: 2 mV sec⁻¹.

### Electrode preparation

NMC-based electrodes were prepared using commercial NMC powder (Toda), which was mixed with PVdF binder (5130, Solvay) and LITX™ 200 conductive carbon (Cabot Corporation) in a weight ratio of 94:3:3 using NMP as solvent. The obtained electrode paste was coated on battery grade aluminum foil using a laboratory doctor blade technique. Subsequently, electrodes were punched having a diameter of 12 mm. After drying at 120 °C under vacuum over night, such electrodes had an average mass loading of around 11 mg cm⁻².

LFP-based electrodes were prepared by mixing commercial LFP powder (Südchemie) with PVdF 5130 and LITX^{™} 200 conductive carbon in a weight ratio of 91:6:4 using NMP as solvent. After drying accordingly to the NMC-based electrodes, such electrode disks (ø = 12 mm) had an average mass loading of around 9.5 mg cm⁻².

LNMO-based electrodes were prepared according to the previous description, having an overall composition of 85:5:10 (LNMO:PVdF:Super C65 conductive carbon, TIMCAL) and an average mass loading of around 10 mg cm⁻².

Graphite-based electrodes were prepared using commercial graphite powder (SLP30, TIMCAL), PVdF (Polyvinylidene fluoride) binder (9200, Solvay), and Super C65 conductive carbon, having an overall weight ratio of 91:6:3. Copper foil (battery grade, EVONIK) served as current collector. Punched and dried electrodes had an average mass loading of 4-5 mg cm⁻².

### Electrochemical characterization

Electrochemical studies were performed utilizing three-electrode, Swagelok™-type cells. Lithium metal foil (Rockwood Lithium, battery grade) served as reference and counter electrode, if not otherwise specified. The cells were assembled in an MBraun glove box with oxygen and water contents below 0.5 ppm. A sheet of Whatman GF/D glass fiber drenched with the respective electrolyte solutions served as separator. All electrochemical studies were performed at 20°C ± 2°C. Cyclic voltammetry experiments were performed by means of a VMP3 potentiostat (BioLogic). Galvanostatic cycling of NMC, LFP, and Graphite-based electrodes was carried out using a Maccor Battery Tester 4300. Since lithium foil was used as counter and reference electrode, all the potentials as given refer to the Li⁺/Li reference.

For the investigation of the anodic aluminum dissolution ("corrosion") in various electrolyte compositions blank aluminum foil (battery grade, 99.99% purity, EVONIK) were utilized as working electrode.

### SEM analysis

*Ex situ* scanning electron microscope (SEM) analysis of aluminum current collectors (EVONIK, 20 µm, purity > 99.9%) was carried out on a ZEISS Auriga® microscope.

### Solvents and lithium salts

Ethylene carbonate (EC), diethyl carbonate (DEC), and dimethyl carbonate (DMC), all battery grade, were purchased at UBE Corporation and Ferro Corporation. Readily prepared EC:DMC (1:1) 1M LiPF₆ electrolyte (LP30) was purchased at Merck KGaA.

4-fluoro-1,3-dioxolan-2-one (F₁EC), *trans*-4,5-difluoro-1,3-dioxolan-2-one (F₂EC), ethyl (1-fluoroethyl) carbonate (F₁DEC) and 1-fluoroethyl (2,2,2-trifluoroethyl) carbonate (F₄DEC), all battery grade, were provided by Solvay GmbH.

LiPF₆, lithium bis(trifluoromethanesulfonyl)imide LiN(SO₂CF₃)₂ (LiTFSI), and lithium (nonafluoro butan-2-one sulfonyl)(trifluoromethylsulfonyl)imide, all battery grade, were purchased at 3M as well as Acros Organics and provided by Eras Labo, respectively. The latter provided by Eras Labo was further purified by recrystallization in distilled anisole inside a glove box, then dried at 140 °C under a 2 mm Hg pressure.

### Preparation of electrolyte solutions

Electrolyte solutions were prepared by providing or mixing the solvents in their respective weight ratios and dissolving the lithium salt in an appropriate amount to yield a 1M solution.

### Example 1

Determination of aluminium corrosion in ethyl (1-fluoroethyl) carbonate (F₁DEC)

An electrolyte solution of 1M LiTFSI in F₁DEC was prepared and cyclic voltammetry was performed using an aluminum foil as working electrode for 100 cyclic potentiodynamic sweeps in a potential rang ranging from 3.3 V (cathodic limit) to 5.1 V (anodic limit). A scan rate of 5 mV sec⁻¹ was applied.

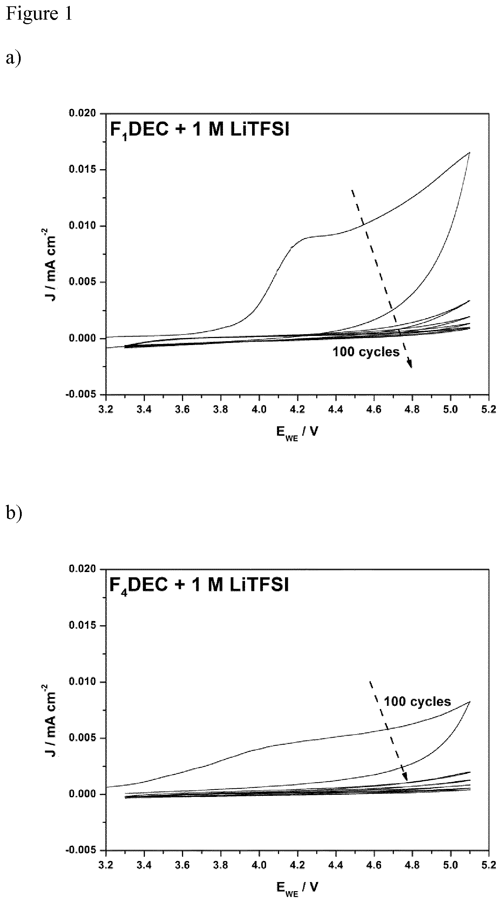

Figure 1a) shows the cyclovoltammogram for 1M LiTFSI in F₁DEC. As can be taken from the figure 1a), after the first cycle the observed current density was significantly decreasing and almost no current could be observed subsequently upon the continuous potentiodynamic sweeps, indicating the initial formation of a protective surface film on the aluminum surface and a thus prevented anodic aluminum dissolution upon further polarization of the aluminum foil. The prevention of aluminum dissolution was further confirmed by a subsequent SEM analysis of the aluminum electrode, which did not show any indication of anodic aluminum dissolution.

### Example 2

Determination of aluminium corrosion in 1-fluoroethyl (2,2,2-trifluoroethyl) carbonate (F₄DEC)

An electrolyte solution of 1 M LiTFSI in F₄DEC was prepared and cyclic voltammetry was performed using aluminum as working electrode for 100 cyclic potentiodynamic sweeps in a potential rang ranging from 3.3 V to 5.1 V. A scan rate of 5 mV sec⁻¹ was applied.

Figure 1b) shows the cyclovoltammogram for 1M LiTFSI in F₄DEC. As can be taken from the figure 1b), also for F₄DEC as the solvent only for the initial anodic potentiodynamic sweep an evolving current could be observed and almost no current could be detected subsequently upon the continuous potentiodynamic sweeps, indicating the initial formation of a protective surface film on the aluminum surface and a thus prevented anodic aluminum dissolution upon further polarization of the aluminum foil. The prevention of aluminum dissolution further was confirmed by a subsequent SEM analysis of the aluminum electrode, which showed no aluminum dissolution.

This shows that the utilization of linear fluorinated carbonates as electrolyte solvent for LiTFSI-based electrolytes revealed a similar electrochemical behavior as for the utilization of LiPF₆ as lithium salt. In fact, no aluminum corrosion could be observed on the aluminum foil subsequently, even after 100 potentiodynamic cyclic sweeps.

### Example 3

Determination of aluminium corrosion in a binary mixture of F₁DEC and F₁EC

An electrolyte solution of 1M LiTFSI in a binary mixture of 50 wt.-% F₁DEC and 50 wt.-% F₁EC was prepared and cyclic voltammetry was performed using aluminum as working electrode for 100 cycles in a potential rang ranging from 3.3 V to 5.1 V. A scan rate of 5 mV sec⁻¹ was applied.

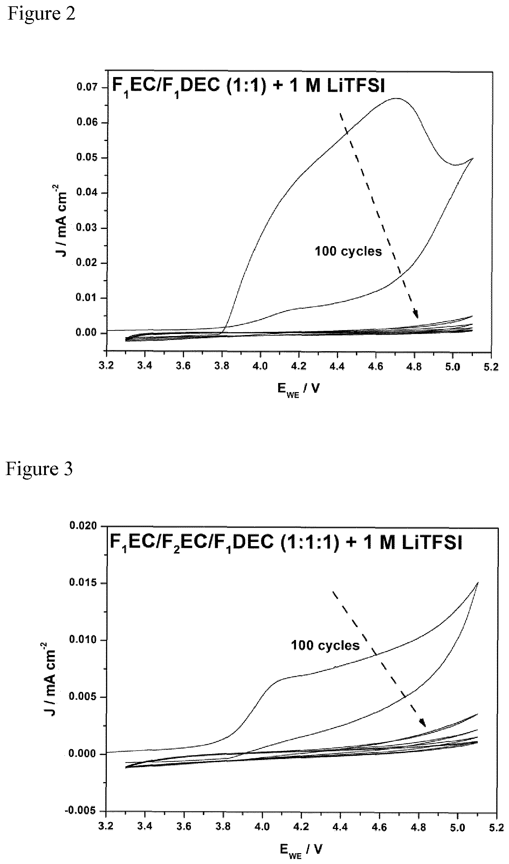

Figure 2 shows the cyclovoltammogram of 1 M LiTFSI in the binary mixture of F₁DEC and F₁EC (1:1). As can be taken from the figure 2, for the binary solvent mixture of F₁DEC and the cyclic fluorinated F₁EC, the observed current density increased starting from around 3.8 V. However, no evolving current could be detected for the subsequent potentiodynamic sweeps, indicating the presence of a protective layer on the aluminum surface formed upon the initial anodic sweep, preventing continuous anodic aluminum dissolution ("corrosion"). Accordingly, no pitting corrosion could be observed for a subsequent ex situ SEM analysis of the electrochemically studied aluminum foil.

Apparently, 50 wt.% of the linear fluorinated carbonate are sufficient to prevent anodic aluminum dissolution by the formation of a protective surface film, enabling an increased flexibility of tailoring suitable electrolyte formulations, possessing enhanced electrochemical characteristics in terms of e.g. ionic conductivity.

### Example 4

Determination of aluminium corrosion in a ternary mixture of F₁DEC, F₁EC and F₂EC

An electrolyte solution of 1 M LiTFSI in a ternary mixture of F₁DEC, F₁EC, and F₂EC in a weight ratio of 1:1:1 was prepared and cyclic voltammetry was performed using aluminum as working electrode for 100 cycles in a potential rang ranging from 3.3 V to 5.1 V. A scan rate of 5 mV sec⁻¹ was applied.

Figure 3 shows the cyclovoltammogram of 1 M LiTFSI in a ternary mixture of F₁DEC, F₁EC and F₂EC (1:1:1). For the ternary solvent mixture the characteristic shape of the first cyclo voltammogram could be observed as was for the pure linear fluorinated carbonates (examples 1 and 2) as well as for the binary solvent mixture (example 3), indicating the initial passivation of the aluminum surface, leading to a prevention of subsequent anodic aluminum dissolution. Nevertheless, the initially detected evolving current is significantly lower than for the former electrolyte solutions, indicating a beneficial effect of F₂EC. Moreover, subsequent SEM analysis confirmed that the aluminum foil did not show any indication of severe pitting corrosion.

### Example 5

Determination of ionic conductivity of LiTFSI in fluorinated carbonates and mixtures therof

A study on the conductivity of primary and binary electrolyte solvents comprising LiTFSI as lithium salt was performed using electrolyte solutions of 1M LiTFSI in cyclic F₁EC, F₂EC, and F₁EC and F₂EC (1:1), linear F₁DEC and F₄DEC, and binary mixtures of F₁DEC and F₁EC (1:1), F₄DEC and F₁EC (1:1), F₁DEC and F₂EC (1:1), F₄DEC and F₂EC (1:1), as well as for 1 M LiTFSI in DMC and EC and DMC (1:1) as references.

For this purpose, electrical impedance measurements were carried out on a Hewlett-Packard 4192A impedance analyzer, using a two platinum electrode configuration in Radiometer^{®} cells. Measurements were conducted in a temperature range of -30 °C to +60 °C in a frequency range of 13 MHz to 5 Hz applying a 0.03 V alternated voltage with an equilibration time of 1.5 hours. Measurements were averaged on nine points per decade. All electrolyte samples were prepared in and transferred to Jacomex^{®} glove boxes with a water content of less than 10 ppm.

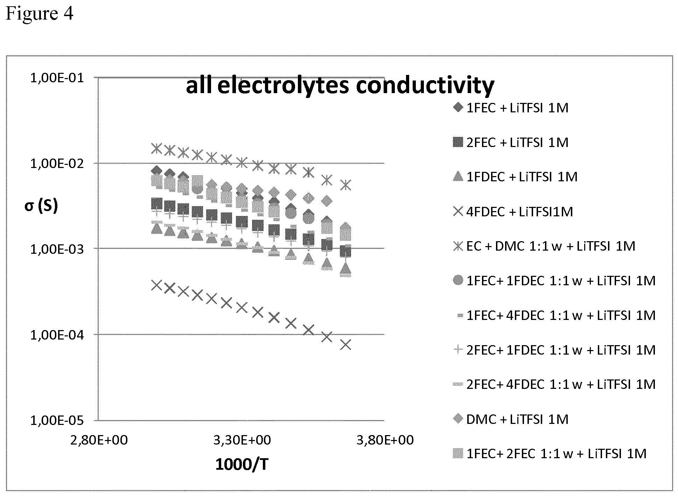

Figure 4 illustrates the ionic conductivities of 1M LiTFSI in the different solutions of linear fluorinated carbonates and binary solvent mixtures of linear and cyclic fluorinated carbonates. As can be taken from the figure 4, the ionic conductivity was further improved by utilizing secondary solvent mixtures of linear and cyclic fluorinated carbonates, illustrating the suitability of such electrolyte compositions for practical applications.

### Example 6

Determination of the electrochemical performance of a carbon coated LiFePO₄ electrode in an electrolyte of 1M LiTFSI in F₁DEC

An electrolyte solution of 1M LiTFSI in F₁DEC was prepared and electrochemical characterization was performed as described above. Figure 5 illustrates the electrochemical performance of a carbon coated LiFePO₄ (LFP) electrode in a solution of 1M LiTFSI in F₁DEC. Figure 5a) shows the galvanostatic cycling of the Li/LiFePO₄ half cell with Li as reference electrode. Cut-off potentials were at 2.8-4.0 V. As can be taken from figure 5a), the LFP electrode showed a high efficiency. Figure 5b) shows the potential profile comparison of Li/LiFePO₄ half cell with Li as reference electrode with 1 M LiPF₆ in EC/DMC (1:1) (LP30) as electrolyte; Cut-offs: 2.8-4.0 V; 1st cycle (C/10). As can be taken from figure 5b), the LFP electrode showed a higher capacity in the F₁DEC electrolyte compared to the standard electrolyte with 1 M LiPF₆ in EC/DMC (1:1) (LP30), while the characteristic shape of the LFP potential profile was well preserved.

### Example 7

Determination of the electrochemical performance of LiNi_{1/3}Mn_{1/3}CO_{1/3}O₂ (NMC) half cell

An electrolyte solution of 1M LiTFSI in F₁DEC was prepared and electrochemical characterization was performed as described above. Figure 6 summarizes the electrochemical performance of a LiNi_{1/3}Mn_{1/3}Co_{1/3}O₂ (NMC) half cell in a solution of 1 M LiTFSI in F₁DEC. Figure 6a) shows the galvanostatic cycling comparison of the Li/LiNi_{1/3}Mn_{1/3}Co_{1/3}O₂ half cell with Li as reference electrode and 1 M LiPF₆ in EC/DMC (1:1) (LP30) as electrolyte; Cut-offs: 3.0-4.3 V. It can be taken from figure 6a) that the efficiency for F₁DEC was slightly higher than for the standard LP30 electrolyte. Figure 6b) shows the potential profile comparison of Li/LiNi_{1/3}Mn_{1/3}Co_{1/3}O₂ half cell with Li as reference electrode with 1 M LiTFSI in F₁DEC and 1 M LiPF₆ in EC/DMC (1:1) (LP30) as electrolyte; Cut-offs: 2.8-4.0 V; 1st cycle (C/10). As can be taken from figure 6b), there was no difference of the capacity in the 1^{st} cycle detected between the NMC electrode in the F₁DEC electrolyte compared to the NMC electrode in the standard electrolyte of 1 M LiPF₆ in EC/DMC (1:1) (LP30), confirming that such electrolyte compositions are suitable for commercially used lithium-ion cathode materials.

### Example 8

Determination of the electrochemical performance of LiNi_{1/3}Mn_{1/3}Co_{1/3}O₂ (NMC) in a binary electrolyte solution of 1 M LiTFSI in F₁DEC/F₁EC

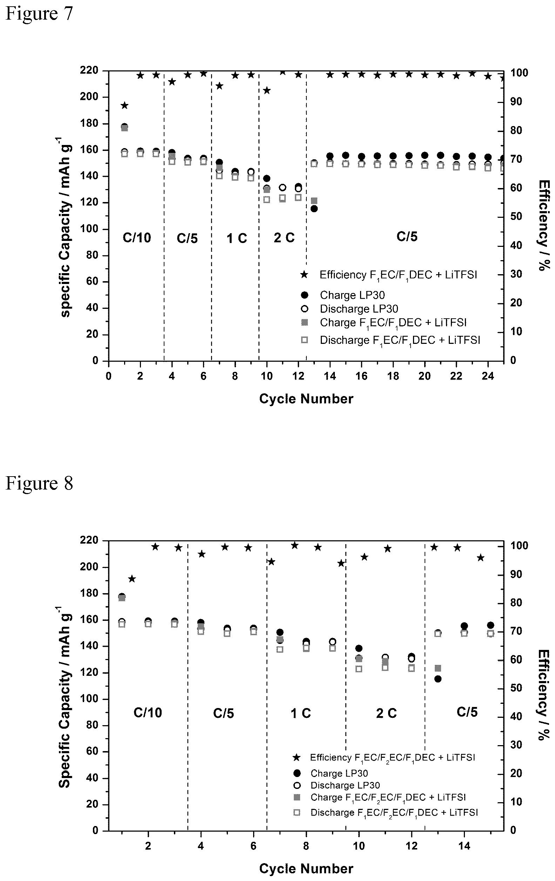

An electrolyte solution of 1M LiTFSI in F₁DEC/F₁EC in a weight ratio of 1:1 was prepared and electrochemical characterization was performed as described above. Figure 7 shows the electrochemical performance of the LiNi_{1/3}Mn_{1/3}Co_{1/3}O₂ (NMC) half cell in a binary mixture of 1 M LiTFSI in F₁DEC and F₁EC in a ratio of 1:1. The figure shows the galvanostatic cycling comparison of Li/LiNi_{1/3}Mn_{1/3}Co_{1/3}O₂ half cell with Li as reference electrode with 1 M LiTFSI in F₁EC/F₁DEC (1:1) and 1 M LiPF₆ in EC/DMC (1:1) (LP30) as electrolyte with Cut-offs at 3.0-4.3 V.

Figure 7 illustrates that the specific capacity as well as the cycling stability and high rate performance of the NMC electrode in the binary mixture of linear and cyclic fluorinated carbonate F₁DEC/F₁EC electrolyte is comparable to the NMC electrode in the standard electrolyte of 1 M LiPF₆ in EC/DMC (1:1) (LP30). Moreover, a coulombic efficiency of almost 100% is obtained, highlighting once more the suitability of such electrolyte compositions for practical lithium-ion applications.

### Example 9

Determination of the electrochemical performance of LiNi_{1/3}Mn_{1/3}Co_{1/3}O₂ (NMC) in a ternary electrolyte solution of 1 M LiTFSI in F₁DEC/F₁EC/F₂EC

An electrolyte solution of 1M LiTFSI in F₁DEC/F₁EC/F₂EC in a weight ratio of 1:1:1 was prepared and electrochemical characterization was performed as described above. Figure 8 presents the electrochemical performance of a LiNi_{1/3}Mn_{1/3}Co_{1/3}O₂ (NMC) half cell in a ternary mixture of 1M LiTFSI in F₁DEC, F₁EC and F₂EC in a ratio of 1:1:1. Figure 8 shows the galvanostatic cycling comparison of Li/LiNi_{1/3}Mn_{1/3}Co_{1/3}O₂ half cell with Li as reference electrode with 1 M LiTFSI in F₁EC/F₂EC/F₁DEC (1:1:1) and 1 M LiPF₆ in EC/DMC (1:1) (LP30) as electrolyte; Cut-offs: 3.0 to 4.3 V. Once again, figure 8 illustrates that the specific capacity as well as the efficiency of the NMC electrode in the ternary mixture of linear and cyclic fluorinated carbonates is highly comparable to the electrode performance in the standard electrolyte.

The examples 7 to 9 using common lithium-ion battery cathode materials (LiFePO₄ (LFP) and LiNi_{1/3}Mn_{1/3}Co_{1/3}O₂ (NCM) confirm that the electrolyte compositions can be readily used for lithium-ion cells and are sufficiently stable towards oxidation, also in presence of transition metal oxides and phosphates, delivering a highly similar specific capacity, cycling stability, and electrochemical performance as observed for commercial LP30 (EC:DMC (1:1), 1M LiPF₆).

### Example 10

Determination of the electrochemical performance of a LiNi_{0.4}Mn_{1.6}O₄ half cell

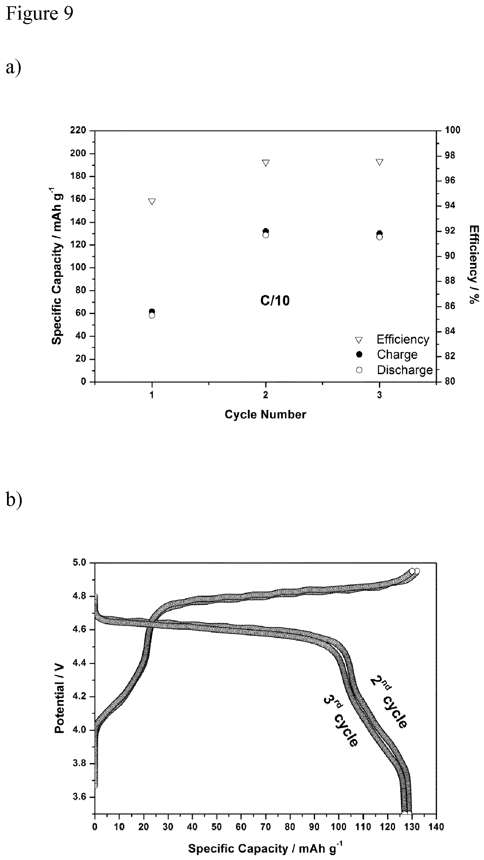

An electrolyte solution of 1M LiTFSI in F₄DEC was prepared and electrochemical characterization was performed as described above. Figure 9 summarizes the electrochemical performance of a LiNi_{0.4}Mn_{1.6}O₄ half cell in a solution of 1 M LiTFSI in F₄DEC. Figure 9a) shows the galvanostatic cycling of Li/LiNi_{0.4}Mn_{1.6}O₄ half cell with Li as reference electrode; Cut-offs: 3.5-4.95 V. Figure 9b) shows the corresponding potential profiles of the Li/LiNi_{0.4}Mn_{1.6}O₄ half cell; Cut-offs: 3.5-4.95 V; 2nd (C/10) and 3rd (C/10) cycle.

These data indicate that F₄DEC appears as a promising base-electrolyte solvent for high voltage cathode materials, as for instance LiNi_{0.4}Mn_{1.6}O₄ after a first activation cycle. By combining a second or third co-solvent as illustrated for F₁DEC in examples 3 to 5, the ionic conductivity and the solubility of LiTFSI in F₄DEC at ambient temperature can be further optimized.

### Example 11

Determination of the electrochemical performance of a graphite half cell

An electrolyte solution of 1M LiTFSI in F₁DEC/F₁EC in a weight ratio of 1:1 was prepared and electrochemical characterization was performed as described above. Figure 10 summarizes the electrochemical performance of the graphite (SLP30) half cell in a binary mixture of 1 M LiTFSI in F₁DEC/F₁EC. Figure 10a) shows the galvanostatic cycling comparison of graphite (SLP30) half cell with Li as reference electrode with 1M LiTFSI in F₁EC/F₁DEC (1:1) and of 1 M LiPF₆ in EC/DMC (1:1) (LP30) as electrolyte; Cut-offs: 0.02 and 1.5 V. Comparing the electrochemical performance of graphite-based electrodes in fluorinated carbonate-based electrolyte and LP30 as a standard electrolyte, it is obvious that the graphite electrode shows a superior cycling stability, specific capacity, and rate capability, while both show a high coulombic efficiency of up to 100%.

Hence, it is shown that such fluorinated carbonate-based electrolytes are not only suitable for current state-of-the-art lithium-ion cathode materials, but moreover for graphite as state-of-the-art lithium-ion anode, confirming that such electrolyte compositions can be readily utilized in state-of-the-art lithium-ion cells and batteries.

Figure 10b) shows selected potential profiles for graphite (SLP30) half cell comprising 1M LiTFSI - F₁EC/F₁DEC (1:1) and 1M LiPF₆ - EC/DMC (1:1) as electrolyte. In fact, both cells show the characteristic potential profile, indicating the different stages of lithium ion (de-)intercalation.

### Comparative Example 12

Measurement of low amounts of F₁DEC in cyclic fluorinated carbonates

To investigate whether for the beneficial effect of the linear fluorinated carbonates already the addition of only little amounts to common organic electrolytes might be sufficient, electrolyte compositions of 1M LiTFSI in F₁EC/F₂EC (1:1) comprising 4 wt% or 11 wt% of F₁DEC, were tested.

Electrolyte solutions of 1 M LiTFSI in F₁EC/F₂EC (1:1) containing either 4 wt% or 11 wt% of F₁DEC were prepared and cyclic voltammetry was performed using an aluminum foil as working electrode for 100 cycles in a potential rang ranging from 3.3 V (cathodic limit) to 5.1 V (anodic limit). A scan rate of 5 mV sec⁻¹ was applied.

The cyclovoltammograms showed a continuously increasing evolving current density during the continuous potentiodynamic sweeps, indicating a continuous anodic aluminum dissolution, which illustrates that 4 wt.% or 11 wt.% of F₁DEC in cyclic fluorinated carbonates do not appear to be sufficient to protect the aluminum current collector. Considerable marks of aluminum dissolution ("pitting corrosion") were further confirmed by subsequent SEM analysis of the aluminum electrodes.

This shows that a use as simple additive (weight content of the linear fluorinated carbonate ≤ 11 wt.%) is not sufficient to initially form a protective passivation layer on the aluminum surface in order to suppress aluminum current collector corrosion in solvents of cyclic fluorinated carbonates.

### Example 13

Measurement of 20 wt% and 33 wt% of F₁DEC in cyclic fluorinated carbonates

To further investigate the linear fluorinated carbonates, electrolyte compositions of 1M LiTFSI in F₁EC/F₂EC (1:1) comprising 20 wt% or 33 wt% of F₁DEC, were tested. Electrolyte solutions of 1 M LiTFSI in F₁EC/F₂EC (1:1) containing either 20 wt% or 33 wt% of F₁DEC were prepared and cyclic voltammetry was performed using an aluminum foil as working electrode for 100 cycles in a potential rang ranging from 3.3 V (cathodic limit) to 5.1 V (anodic limit). A scan rate of 5 mV sec⁻¹ was applied.

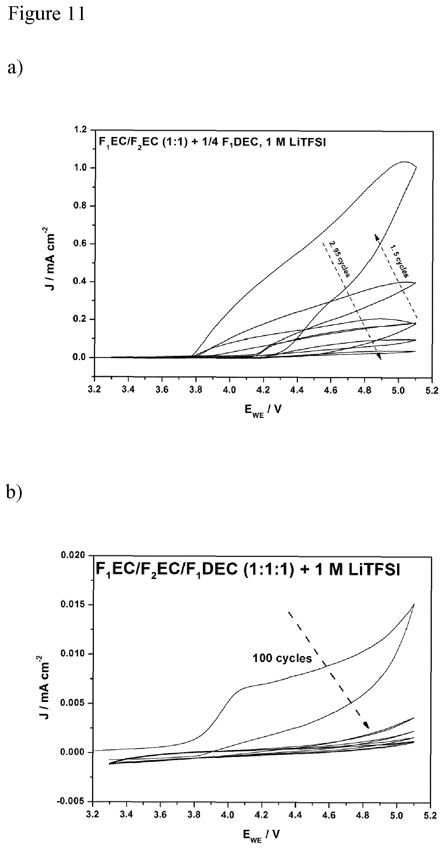

Figure 11a) shows the cyclovoltammogram for a 1M solution of LiTFSI in the mixture of 20 wt% of F₁DEC in a solvent mixture of cyclic fluorinated carbonates F₁EC and F₂EC in a weight ratio of 1:1 after for 100 cycles. The cyclovoltammogram illustrates a clear improvement relatively to the use of 11 wt.%. As can be taken from figure 11a) the detected evolving current density increases upon the first five cyclic potentiodynamic sweeps before it decreases subsequently rather rapidly, indicating the formation of a passivation layer within the first five cyclic sweeps. Subsequent SEM analysis of the aluminum electrodes did not show any severe marks of aluminum corrosion. This confirms that 20 wt.% of F₁DEC provide a just sufficient passivation of the aluminum current collector.

Figure 11b) shows the cyclovoltammogram for a 1M solution of LiTFSI in the mixture of 33 wt% of F₁DEC in F₁EC and F₂EC (1:1) after for 100 cycles. As can be taken from the figure 11b) no evolving current was detected for the second and subsequent potentiodynamic sweeps. The prevention of aluminum dissolution further was confirmed by a subsequent SEM analysis of the aluminum electrode, which showed no marks of aluminum dissolution.

This shows that the utilization of 33 wt.% of the linear fluorinated carbonate F₁DEC as electrolyte solvent for LiTFSI appears to be more than sufficient for a proper passivation of the aluminum current collector.

### Comparative Example 14

Measurement of low amounts of F₁DEC in non-fluorinated carbonates

In parallel to comparative example 12, also the effect of 11 wt% of the linear fluorinated carbonate F₁DEC in non-fluorinated carbonates was investigated.

An electrolyte solution of 1 M LiTFSI in EC/DMC (1:1) containing 11 wt% of F₁DEC was prepared and cyclic voltammetry was performed using an aluminum foil as working electrode for 100 cycles in a potential rang ranging from 3.3 V (cathodic limit) to 5.1 V (anodic limit). A scan rate of 5 mV sec⁻¹ was applied.

The cyclovoltammograms showed a continuously increasing evolving current density during the continuous potentiodynamic sweeps, which illustrates that 11 wt.% of F₁DEC in non-fluorinated carbonates is not sufficient to protect the aluminum current collector. Furthermore, obvious marks of aluminum dissolution were illustrated by subsequent SEM analysis of the aluminum electrode.

This shows that a use of 11 wt% of the linear fluorinated carbonate F₁DEC in non-fluorinated carbonate-based electrolytes is obviously not sufficient to initially form a suitable passivation layer on the aluminum surface, thus protecting the aluminum current collector from corrosion.

### Example 15

Measurement of 25 wt% and 33 wt% of F₁DEC in non-fluorinated carbonates

Further, electrolyte compositions of 1M LiTFSI in non-fluorinated carbonates comprising 25 wt% or 33 wt% of F₁DEC were tested. Electrolyte solutions of 1M LiTFSI in EC/DMC (1:1) containing either 25 wt% or 33 wt% of F₁DEC were prepared and cyclic voltammetry was performed using an aluminum foil as working electrode for 100 cycles in a potential rang ranging from 3.3 V (cathodic limit) to 5.1 V (anodic limit). A scan rate of 5 mV sec⁻¹ was applied.

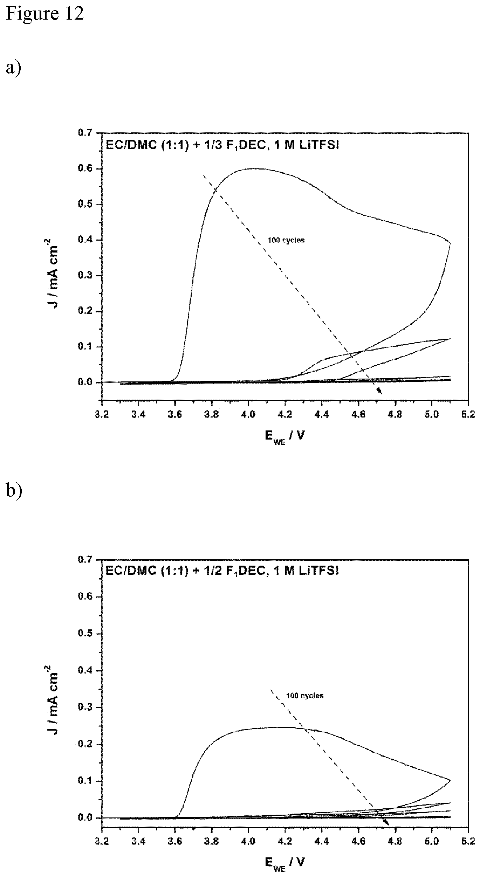

Figure 12a) shows the cyclovoltammogram for a 1M solution of LiTFSI in a mixture of 25 wt% of F₁DEC in a solvent mixture of non-fluorinated carbonates EC and DMC in a weight ratio of 1:1 during 100 cycles. The cyclovoltammogram illustrates an aluminum passivation within the first cycles by using 25 wt% of F₁DEC. Figure 12b) shows the cyclovoltammogram for a 1M solution of LiTFSI in a mixture of 33 wt% of F₁DEC in EC / DMC in a ratio of 1:1 for 100 cycles. As can be taken from the figure 12b), a F₁DEC content of around 33 wt.% appears preferable with respect to the occurring current within the initial cycles, indicating a more effective aluminum passivation.

### Example 16

Determination of the electrochemical stability window (ESW)

For the determination of the ESW of several electrolyte compositions a platinum wire was used as working electrode while lithium foils were used as counter and reference electrodes and the cell was polarized up to 6.0 V. An evolving current of 0.01 mA was defined as stability limit, indicating the anodic decomposition of the investigated electrolyte compositions.

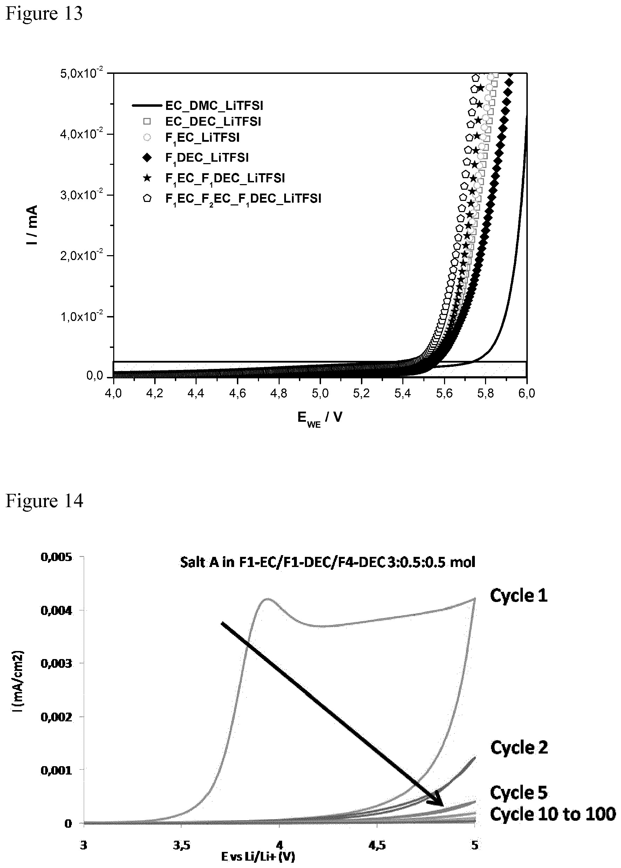

Figure 13 illustrates the determination of the electrochemical stability window (ESW) of fluorinated and non-fluorinated organic carbonate solvents with 1M LiTFSI as conductive salt. As can be taken from figure 13, for an electrolyte solution of 1 M LiTFSI in EC/DMC (1:1) the oxidative ESW maximum vs. Li/Li⁺ was determined as 5.84 V, in F₁DEC the oxidative ESW maximum was 5.56 V, in F₁DEC/F₁EC (1:1) it was 5.52 V, in EC/DMC (1:1) 5.49 V, and in F₁EC it was 5.45. This confirms that the electrolyte compositions comprising linear fluorinated carbonates are stable at least up to 5 V, which is well above the solid state redox potentials of currently used and investigated lithium-ion cathode materials.

### Example 17

### (not according to the invention)

Investigation of lithium (nonafluoro butan-2-one sulfonyl)(trifluoromethylsulfonyl)imide

An electrolyte solution of 1M lithium (nonafluoro butan-2-one sulfonyl) (trifluoromethylsulfonyl) imide (salt A) in a ternary mixture of F₁EC/F₁DEC/F₃DEC in a mol ratio of 3:0.5:0.5 was prepared and cyclic voltammetry was performed using an aluminum foil as working electrode for 100 cycles in a potential rang ranging from 3 V to 5 V. A scan rate of 2 mV sec⁻¹ was applied.

Figure 14 presents the cyclovoltammogram for 100 cycles, showing the characteristic behaviour (see e.g. Figure 1 a and b) of an initially evolving current, indicating the formation of a protective passivation layer on the aluminum surface, successfully preventing a continuous anodic aluminum dissolution upon the subsequent cyclic potentiodynamic sweeps, which is confirmed by the zero current.

Also the optical microscope images of the utilized Al foil, obtained by means of a Leica DM2700 M, showed no marks of aluminum dissolution ("pitting corrosion"). This shows that also for other sulfonimide-based lithium salts aluminum dissolution can be prevented by using the linear fluorinated carbonates of the invention.

## Claims

1. An electrolyte solution comprising an electrolyte salt and an electrolyte solvent, wherein the electrolyte solvent comprises an n-fluoro diethyl carbonate selected from the group comprising ethyl (1-fluoroethyl) carbonate, 1-fluoroethyl (2,2,2-trifluoroethyl) carbonate and mixtures thereof in an amount in the range of ≥ 20 wt% to ≤ 100 wt%, referring to a total amount of the electrolyte solvent of 100 wt%, and wherein the electrolyte salt is a lithium sulfonimide salt selected from the group comprising bis(trifluoromethanesulfonyl)imide LiN(SO₂CF₃)₂ and lithium bis(fluorosulfonyl)imide LiN(FSO₂)₂.

2. The electrolyte solution according to claim 1, wherein the electrolyte solvent further comprises at least one cyclic fluorinated carbonate selected from the group comprising 4-fluoro-1,3-dioxolan-2-one, cis-4,5-difluoro-1,3-dioxolan-2-one, *trans*-4,5-difluoro-1,3-dioxolan-2-one and mixtures thereof.

3. The electrolyte solution according to claim 1 or 2, wherein the electrolyte solution comprises a binary solvent mixture of an n-fluoro diethyl carbonate selected from ethyl (1-fluoroethyl) carbonate or 1-fluoroethyl (2,2,2-trifluoroethyl) carbonate, and a cyclic fluorinated carbonate selected from the group comprising 4-fluoro-1,3-dioxolan-2-one, cis-4,5-difluoro-1,3-dioxolan-2-one, and *trans-4,5-*difluoro-1,3-dioxolan-2-one.

4. The electrolyte solution according to any of the preceding claims, wherein the electrolyte solution comprises a mixture of ethyl (1-fluoroethyl) carbonate or 1-fluoroethyl (2,2,2-trifluoroethyl) carbonate and 4-fluoro-1,3-dioxolan-2-one in a ratio of 1:1.

5. The electrolyte solution according to any of the preceding claims, wherein the electrolyte solution comprises a ternary solvent mixture of at least one n-fluoro diethyl carbonate selected from the group comprising ethyl (1-fluoroethyl) carbonate, 1-fluoroethyl (2,2,2-trifluoroethyl) carbonate and mixtures thereof, and at least one cyclic fluorinated carbonate selected from the group comprising 4-fluoro-1,3-dioxolan-2-one, cis-4,5-difluoro-1,3-dioxolan-2-one, *trans*-4,5-difluoro-1,3-dioxolan-2-one and mixtures thereof.

6. The electrolyte solution according to any of the preceding claims, wherein the electrolyte solution comprises a ternary solvent mixture of ethyl (1-fluoroethyl) carbonate or 1-fluoroethyl (2,2,2-trifluoroethyl) carbonate, 4-fluoro-1,3-dioxolan-2-one, and *trans*-4,5-difluoro-1,3-dioxolan-2-one in a ratio of 1:1:1.

7. The electrolyte solution according to any of the preceding claims, wherein the electrolyte solution comprises a non-fluorinated organic carbonate selected from the group comprising ethylene carbonate, ethyl methyl carbonate, propylene carbonate, dimethyl carbonate, diethyl carbonate and mixtures thereof.

8. The electrolyte solution according to any of the preceding claims, wherein the electrolyte solution comprises the n-fluoro diethyl carbonate in a range of ≥ 25 wt% to ≤ 100 wt%, preferably in a range of ≥ 25 wt% to ≤ 75 wt%, more preferably in a range of ≥ 30 wt% to ≤ 50 wt%, referring to a total amount of the electrolyte solvent of 100 wt%.

9. The electrolyte solution according to any of the preceding claims, wherein the electrolyte solution comprises a mixture of ethylene carbonate and dimethyl carbonate in a ratio of 1:1 and the n-fluoro diethyl carbonate in the range of ≥ 20 wt% to ≤ 50 wt%, preferably in the range of ≥ 25 wt% to ≤ 50 wt%, referring to a total amount of the electrolyte solvent of 100 wt%.

10. An alkali or alkaline earth metal-based electrochemical energy storage device, particularly a lithium battery, a lithium ion battery, a lithium-ion accumulator, a lithium polymer battery or a lithium-ion capacitor, comprising an electrolyte solution according to any of the preceding claims.

11. Use of an n-fluoro diethyl carbonate selected from the group comprising ethyl (1-fluoroethyl) carbonate, 1-fluoroethyl (2,2,2-trifluoroethyl) carbonate and mixtures thereof, in an amount in the range of ≥ 20 wt% to ≤ 100 wt%, referring to a total amount of a electrolyte solvent of 100 wt%, for the prevention of aluminum current collector corrosion in an alkali or alkaline earth metal-based electrochemical energy storage device, particularly a lithium-ion battery or lithium polymer battery containing an electrolyte solution comprising an alkali or alkaline earth metal sulfonimide or sulfonmethide salt.

12. The use according to claim 11, wherein the alkali or alkaline earth metal sulfonimide salt is selected from the group comprising lithium bis(trifluoromethanesulfonyl)imide, lithium bis(fluorosulfonyl)imide, LiN(FSO₂)₂, lithium (trifluoromethylsulfonyl)(nonafluorobutanesulfonyl)imide LiN(SO₂CF₃)(SO₂C₄F₉), lithium (fluorosulfonyl)(nonafluorobutanesulfonyl)imide LiN(SO₂F)(SO₂C₄F₉), lithium (nonafluoro butan-2-one sulfonyl)(trifluoromethylsulfonyl)imide LiN(SO₂C₂F_{4O}C₂F₅)(SO₂CF₃), lithium (nonafluoro butan-2-one sulfonyl)(fluorosulfonyl)imide LiN(SO₂C₂F₄OC₂F₅)(SO₂F).

13. The use according to claims 11 or 12, wherein the electrolyte solvent further comprises at least one cyclic fluorinated carbonate selected from the group comprising 4-fluoro-1,3-dioxolan-2-one, cis-4,5-difluoro-1,3-dioxolan-2-one, *trans*-4,5-difluoro-1,3-dioxolan-2-one and mixtures thereof, and/or a non-fluorinated organic carbonate selected from the group comprising ethylene carbonate, ethyl methyl carbonate, propylene carbonate, dimethyl carbonate, diethyl carbonate and mixtures thereof.

## Patentansprüche

1. Elektrolytlösung, die ein Elektrolytsalz und ein Elektrolytlösungsmittel umfasst, wobei das Elektrolytlösungsmittel ein n-Fluordiethylcarbonat umfasst, das aus der Gruppe ausgewählt ist, die Ethyl(1-fluorethyl)carbonat, 1-Fluorethyl(2,2,2,trifluorethyl)carbonat und Gemische davon umfasst, in einer Menge im Bereich von ≥ 20 Gew.-% bis ≤ 100 Gew.-%, bezogen auf eine Gesamtmenge des Elektrolytlösungsmittels von 100 Gew.-%, und wobei das Elektrolytsalz ein Lithiumsulfonimidsalz ist, ausgewählt aus der Gruppe, die Bis(trifluormethansulfonyl)imid, LiN(SO₂C_{F3})₂, und Lithiumbis(fluorsulfonyl)imid, LiN(FSO₂) umfasst.

2. Elektrolytlösung nach Anspruch 1, wobei das Elektrolytlösungsmittel weiter mindestens ein zyklisches fluoriertes Carbonat umfasst, das aus der Gruppe ausgewählt ist, die 4-Fluor-1,3-dioxolan-2-on, *cis*-4,5-Difluor-1,3-dioxolan-2-on, *trans*-4,5-Difluor-1,3-dioxolan-2-on und Gemische davon umfasst.

3. Elektrolytlösung nach Anspruch 1 oder 2, wobei die Elektrolytlösung ein binäres Lösungsmittelgemisch aus einem n-Fluordiethylcarbonat, ausgewählt aus Ethyl(1-fluorethyl)carbonat oder 1-Fluorethyl(2,2,2,trifluorethyl)carbonat, und einem zyklischen fluorierten Carbonat, ausgewählt aus der Gruppe umfassend 4-Fluor-1,3-dioxolan-2-on, *cis*-4,5-Difluor-1,3-dioxolan-2-on, und *trans-4,5-*Difluor-1,3-dioxolan-2-on, umfasst.

4. Elektrolytlösung nach einem der vorhergehenden Ansprüche, wobei die Elektrolytlösung ein Gemisch aus Ethyl(1-fluorethyl)carbonat oder 1-Fluorethyl(2,2,2,trifluorethyl)carbonat und 4-Fluor-1,3-dioxolan-2-on in einem Verhältnis von 1:1 umfasst.

5. Elektrolytlösung nach einem der vorhergehenden Ansprüche, wobei die Elektrolytlösung ein ternäres Lösungsmittelgemisch umfasst aus mindestens einem n-Fluordiethylcarbonat, das aus der Gruppe ausgewählt ist, die Ethyl(1-fluorethyl)carbonat, 1-Fluorethyl(2,2,2,trifluorethyl)carbonat und Gemische davon umfasst, und mindestens einem zyklischen fluorierten Carbonat, das aus der Gruppe ausgewählt ist, die 4-Fluor-1,3-dioxolan-2-on, *cis*-4,5-Difluor-1,3-dioxolan-2-on, *trans-4,5-*Difluor-1,3-dioxolan-2-on und Gemische davon umfasst.

6. Elektrolytlösung nach einem der vorhergehenden Ansprüche, wobei die Elektrolytlösung ein ternäres Lösungsmittelgemisch umfasst aus Ethyl(1-fluorethyl)carbonat oder 1-Fluorethyl(2,2,2,trifluorethyl)carbonat, 4-Fluor-1,3-dioxolan-2-on, und trans-4,5-Difluor-1,3-dioxolan-2-on in einem Verhältnis von 1:1:1.

7. Elektrolytlösung nach einem der vorhergehenden Ansprüche, wobei die Elektrolytlösung ein nicht fluoriertes organisches Carbonat umfasst, das aus der Gruppe ausgewählt ist, die Ethylencarbonat, Ethylmethylcarbonat, Propylencarbonat, Dimethylcarbonat, Diethylcarbonat und Gemische davon umfasst.

8. Elektrolytlösung nach einem der vorhergehenden Ansprüche, wobei die Elektrolytlösung das n-Fluordiethylcarbonat in einem Bereich von ≥ 25 Gew.-% bis ≤ 100 Gew.-% umfasst, bevorzugt in einem Bereich von ≥ 25 Gew.-% bis ≤ 75 Gew.-%, stärker bevorzugt in einem Bereich von ≥ 30 Gew.-% bis ≤ 50 Gew.-%, bezogen auf eine Gesamtmenge des Elektrolytlösungsmittels von 100 Gew.-%.

9. Elektrolytlösung nach einem der vorhergehenden Ansprüche, wobei die Elektrolytlösung ein Gemisch aus Ethylencarbonat und Dimethylcarbonat in einem Verhältnis von 1:1 und das n-Fluordiethylcarbonat in dem Bereich von ≥ 20 Gew.-% bis ≤ 50 Gew.-% umfasst, bevorzugt in dem Bereich von ≥ 25 Gew.-% bis ≤ 50 Gew.-%, bezogen auf eine Gesamtmenge des Elektrolytlösungsmittels von 100 Gew.-%.

10. Elektrochemische Energiespeichervorrichtung auf Alkali- oder Erdalkalimetallbasis, insbesondere eine Lithiumbatterie, eine Lithiumionenbatterie, ein Lithiumionenakkumulator, eine Lithiumpolymerbatterie oder ein Lithiumionenkondensator, die eine Elektrolytlösung nach einem der vorhergehenden Ansprüche umfasst.

11. Verwendung eines n-Fluordiethylcarbonats, das aus der Gruppe ausgewählt ist, die Ethyl(1-fluorethyl)carbonat, 1-Fluorethyl(2,2,2,trifluorethyl)carbonat und Gemische davon umfasst, in einer Menge im Bereich von ≥ 20 Gew.-% bis ≤ 100 Gew.-%, bezogen auf eine Gesamtmenge eines Elektrolytlösungsmittels von 100 Gew.-%, zur Verhinderung von Aluminium-Stromkollektor-Korrosion in einer elektrochemischen Energiespeichervorrichtung auf Alkali- oder Erdalkalimetallbasis, insbesondere einer Lithiumionenbatterie oder Lithiumpolymerbatterie, die eine Elektrolytlösung enthält, die ein Alkali- oder Erdalkalimetallsulfonimid oder -sulfonmethidsalz umfasst.

12. Verwendung nach Anspruch 11, wobei das Alkali- oder Erdalkalimetallsulfonimidsalz aus der Gruppe ausgewählt ist, die Lithiumbis(trifluormethansulfonyl)imid, Lithiumbis(fluorsulfonyl)imid, LiN(FSO₂)₂, Lithium(trifluormethylsulfonyl)(nonafluorbutansulfonyl) imid, LiN(SO₂CF₃) (SO₂C₄F₉), Lithium(fluorsulfonyl)(nonafluorbutansulfonyl)imid, LiN(SO₂F) (SO₂C₄F₉), Lithium(nonafluorbutan-2-onsulfonyl)(trifluormethylsulfonyl)imid, LiN (SO₂C₂F₄OC₂F₅) (SO₂CF₃), Lithium (nonafluorbutan-2-onsulfonyl)(fluorsulfonyl)imid, LiN(SO₂C₂F₄OC₂F₅) (SO₂F) umfasst.

13. Verwendung nach Anspruch 11 oder 12, wobei das Elektrolytlösungsmittel weiter mindestens ein zyklisches fluoriertes Carbonat umfasst, das aus der Gruppe ausgewählt ist, die 4-Fluor-1,3-dioxolan-2-on, *cis*-4,5-Difluor-1,3-dioxolan-2-on, *trans*-4,5-Difluor-1,3-dioxolan-2-on und Gemische davon umfasst, und/oder ein nicht fluoriertes organisches Carbonat, das aus der Gruppe ausgewählt ist, die Ethylencarbonat, Ethylmethylcarbonat, Propylencarbonat, Dimethylcarbonat, Diethylcarbonat und Gemische davon umfasst.

## Revendications

1. Solution d'électrolyte comprenant un sel d'électrolyte et un solvant d'électrolyte, le solvant d'électrolyte comprenant le carbonate de n-fluorodiéthyle choisi dans le groupe comprenant le carbonate d'éthyl-(1-fluoroéthyle), le carbonate de 1-fluoroéthyl-(2,2,2-trifluoroéthyle) et des mélanges de ceux-ci en une quantité dans la plage de ≥ 20 % en poids à ≤ 100 % en poids, par rapport à une quantité totale du solvant d'électrolyte de 100 % en poids, et où le sel d'électrolyte sel est un sel de lithium-sulfonimide choisi dans le groupe comprenant le bis (trifluorométhanesulfonyl) imide LiN(SO₂CF₃)₂ et le lithium-bis(fluorosulfonyl)imide LiN(FSO₂)₂.

2. Solution d'électrolyte selon la revendication 1, dans laquelle solvant d'électrolyte comprend en outre au moins un carbonate fluoré cyclique choisi dans le groupe comprenant la 4-fluoro-1,3-dioxolan-2-one, la cis-4,5-difluoro-1,3-dioxolan-2-one, la trans-4,5-difluoro-1,3-dioxolan-2-one et des mélanges de celles-ci.

3. Solution d'électrolyte selon la revendication 1 ou 2, la solution d'électrolyte comprenant un mélange de solvants binaire d'un carbonate de n-fluorodiéthyle choisi parmi le carbonate d'éthyl-(1-fluoroéthyle) ou le carbonate de 1-fluoroéthyl-(2,2,2-trifluoroéthyle), et un carbonate fluoré cyclique choisi dans le groupe comprenant la 4-fluoro-1,3-dioxolan-2-one, la cis-4,5-difluoro-1,3-dioxolan-2-one, et la trans-4,5- difluoro-1,3-dioxolan-2-one.

4. Solution d'électrolyte selon l'une quelconque des revendications précédentes, la solution d'électrolyte comprenant un mélange de (1-fluoroéthyl)carbonate d'éthyle ou le carbonate de 1-fluoroéthyl-(2,2,2-trifluoroéthyle) et de 4-fluoro-1,3-dioxolan-2-one dans un rapport de 1:1.

5. Solution d'électrolyte selon l'une quelconque des revendications précédentes, la solution d'électrolyte comprenant un mélange de solvants ternaire d'au moins un carbonate de n-fluorodiéthyle choisi dans le groupe comprenant le carbonate d'éthyl-(1-fluoroéthyle), le carbonate de 1-fluoroéthyl-(2,2,2-trifluoroéthyle) et des mélanges de ceux-ci, et au moins un carbonate fluoré cyclique choisi dans le groupe comprenant la 4-fluoro-1,3-dioxolan-2-one, la cis-4,5-difluoro-1,3-dioxolan-2-one, la *trans-4,5-*difluoro-1,3-dioxolan-2-one et des mélanges de celles-ci.

6. Solution d'électrolyte selon l'une quelconque des revendications précédentes, la solution d'électrolyte comprenant un mélange de solvants ternaire de carbonate d'éthyl-(1-fluoroéthyle) ou de carbonate de 1-fluoroéthyl-(2,2,2-trifluoroéthyle), de 4-fluoro-1,3-dioxolan-2-one, et de *trans*-4,5-difluoro-1,3-dioxolan-2-one dans un rapport de 1:1:1.

7. Solution d'électrolyte selon l'une quelconque des revendications précédentes, la solution d'électrolyte comprenant un carbonate organique non fluoré choisi dans le groupe comprenant le carbonate d'éthylène, le carbonate d'éthylméthyle, le carbonate de propylène, le carbonate de diméthyle, le carbonate de diéthyle et des mélanges de ceux-ci.

8. Solution d'électrolyte selon l'une quelconque des revendications précédentes, la solution d'électrolyte comprenant le carbonate de n-fluorodiéthyle dans une plage de ≥ 25 % en poids à ≤ 100 % en poids, de préférence dans une plage de ≥ 25 % en poids à ≤ 75 % en poids, plus préférablement dans une plage de ≥ 30 % en poids à ≤ 50 % en poids, par rapport à une quantité totale du solvant d'électrolyte de 100 % en poids.

9. Solution d'électrolyte selon l'une quelconque des revendications précédentes, la solution d'électrolyte comprenant un mélange de carbonate d'éthylène et de carbonate de diméthyle dans un rapport de 1:1 et le carbonate de n-fluorodiéthyle dans la plage de ≥ 20 % en poids à ≤ 50 % en poids, de préférence dans la plage de ≥ 25 % en poids à ≤ 50 % en poids, par rapport à une quantité totale du solvant d'électrolyte de 100 % en poids.

10. Dispositif de stockage d'énergie électrochimique à base de métal alcalin ou de métal alcalino-terreux, en particulier une batterie au lithium, une batterie lithium-ion, un accumulateur lithium-ion, une batterie lithium-polymère ou un condensateur lithium-ion, comprenant une solution d'électrolyte selon l'une quelconque des revendications précédentes.

11. Utilisation d'un carbonate de n-fluoro-diéthyle choisi dans le groupe comprenant le carbonate d'éthyl-(1-fluoroéthyle), le carbonate de 1-fluoroéthyl-(2,2,2-trifluoroéthyle) et des mélanges de ceux-ci, en une quantité dans la plage de ≥ 20 % en poids à ≤ 100 % en poids, par rapport à une quantité totale d'un solvant d'électrolyte de 100 % en poids, pour la prévention de la corrosion de collecteur de courant d'aluminium dans un dispositif de stockage d'énergie électrochimique à base de métal alcalin ou alcalino-terreux, en particulier une batterie lithium-ion ou une batterie lithium-polymère contenant une solution d'électrolyte comprenant un sel de sulfonimide ou sulfoneméthide de métal alcalin ou alcalino-terreux.

12. Utilisation selon la revendication 11, dans laquelle le sel de sulfonimide de métal alcalin ou alcalino-terreux sel est choisi dans le groupe comprenant le lithium-bis(trifluorométhanesulfonyl)imide, le lithium-bis (thiorosulfonyl) imide, LiN(FSO₂)₂, le lithium-(trifluorométhylsulfonyl)(nonafluorobutanesulfonyl)imide LiN(SO₂CF₃) (SO₂C₄F₉), le lithium-(fluorosulfonyl)(nonafluorobutanesulfonyl)imide LiN(SO₂F) (SO₂C₄F₉), le lithium-(nonafluorobutan-2-one-sulfonyl)(trifluorométhylsulfonyl)imide LiN(SO₂C₂F₄OC₂F₅) (SO₂CF₃), le lithium-(nonafluorobutan-2-onesulfonyl)(fluorosulfonyl)imide LiN(SO₂C₂F₄OC₂F₅)(SO₂F).

13. Utilisation selon les revendications 11 ou 12, dans laquelle le solvant d'électrolyte comprend en outre au moins un carbonate fluoré cyclique choisi dans le groupe comprenant la 4-fluoro-1,3-dioxolan-2-one, la cis-4,5-difluoro-1,3-dioxolan-2-one, la *trans-4,5-*difluoro-1,3-dioxolan-2-one et des mélanges de celles-ci, et/ou un carbonate organique non fluoré choisi dans le groupe comprenant le carbonate d'éthylène, le carbonate d'éthylméthyle, le carbonate de propylène, le carbonate de diméthyle, le carbonate de diéthyle et des mélanges de ceux-ci.
